# EUROPEAN PATENT APPLICATION

(11) **EP 4 790 273 A1**
(43) Date of publication of application: **12.08.2026**
(21) Application number: 24874760.2
(22) Date of filing: 04.10.2024
(51) Int. Cl.: F16F 1/18, F16F 1/20

(54) **PRESSURE SPRING, PRESSURE SPRING STRUCTURE, AND METHOD FOR MANUFACTURING PRESSURE SPRING**

(30) Priority: 04.10.2023 JP 2023172633
(71) Applicant: NHK Spring Co., Ltd., Yokohama-shi, Kanagawa 236-0004 (JP)
(72) Inventor: SANO, Takamichi, Yokohama-shi, Kanagawa 236-0004 (JP); UETSUHARA, Saiji, Yokohama-shi, Kanagawa 236-0004 (JP); IMAMURA, Masaru, Yokohama-shi, Kanagawa 236-0004 (JP); SUZUKI, Takuto, Yokohama-shi, Kanagawa 236-0004 (JP)
(74) Representative: V.O.
(86) International application number: PCT/JP2024/035651
(87) International publication number: WO 2025/075161

(57) **Abstract**

A pressure spring includes a first leaf spring and a second leaf spring that extend in a length direction, in which both end portions of the first leaf spring in the length direction are fixed portions laminated and connected to the second leaf spring in a plate thickness direction, intermediate portions of the first leaf spring and the second leaf spring in the length direction face each other in a state of being spaced apart from each other in the plate thickness direction, a length of the intermediate portion of the second leaf spring along a surface of the second leaf spring as viewed in a plate width direction is shorter than a length of the intermediate portion of the first leaf spring along a surface of the first leaf spring as viewed in the plate width direction, the intermediate portion of the first leaf spring has a residual stress applied to an outer surface side thereof, which is an opposite side to the second leaf spring in the plate thickness direction, in a direction of pulling in a direction along an outer surface of the first leaf spring as viewed in the plate width direction, and the intermediate portion of the second leaf spring is in an unloaded state in the length direction.

## Description

### TECHNICAL FIELD

The present invention relates to a pressure spring, a pressure spring structure, and a method for manufacturing a pressure spring.

Priority is claimed on Japanese Patent Application No. 2023-172633, filed October 4, 2023, the content of which is incorporated herein by reference.

### BACKGROUND ART

In the related art, for example, as disclosed in Patent Document 1, a pressure spring is known in which a pressed object is interposed between and pressed by apex portions of curved first and second leaf springs, in a plate thickness direction.

### Citation List

### Patent Document

Patent Document 1: Japanese Patent No. 5040228

### SUMMARY OF INVENTION

### Technical Problem

In the related art, the pressure spring tends to require a large space to output a high pressing force, and it is difficult to output a high pressing force in a space-saving manner.

The present invention provides a pressure spring, a pressure spring structure, and a method for manufacturing a pressure spring, capable of outputting a high pressing force in a space-saving manner.

### Solution to Problem

A pressure spring according to an aspect of the present invention includes a first leaf spring and a second leaf spring that extend in a length direction, both end portions of the first leaf spring in the length direction are fixed portions laminated and connected to the second leaf spring in a plate thickness direction, intermediate portions of the first leaf spring and the second leaf spring in the length direction face each other in a state of being spaced apart from each other in the plate thickness direction, a length of the intermediate portion of the second leaf spring along a surface of the second leaf spring as viewed in a plate width direction is shorter than a length of the intermediate portion of the first leaf spring along a surface of the first leaf spring as viewed in the plate width direction, the intermediate portion of the first leaf spring has a residual stress applied to an outer surface side thereof, which is an opposite side to the second leaf spring in the plate thickness direction, in a direction of pulling in a direction along an outer surface of the first leaf spring as viewed in the plate width direction, and the intermediate portion of the second leaf spring is in an unloaded state in the length direction.

The first leaf spring and the second leaf spring are included. Therefore, when the pressure spring is interposed between a pair of pressed objects in the plate thickness direction and a pushing load that is directed toward the second leaf spring in the plate thickness direction is applied to the intermediate portion of the first leaf spring, a tensile force in the length direction is applied to the second leaf spring through the fixed portions of the first leaf spring.

At this time, the length of the intermediate portion of the second leaf spring along the surface of the second leaf spring as viewed in the plate width direction is shorter than the length of the intermediate portion of the first leaf spring along the surface of the first leaf spring as viewed in the plate width direction. Therefore, regardless of a material or the like of the second leaf spring, the second leaf spring limits deformation of the first leaf spring, and the spring constant of the pressure spring that appears can be increased, so that a high pressing force can be output in a space-saving manner.

Further, the residual stress in the direction of pulling in the direction (hereinafter, referred to as a first specific direction) along the outer surface of the first leaf spring as viewed in the plate width direction is applied to the outer surface side of the intermediate portion of the first leaf spring. Therefore, a compression stress in the first specific direction generated on the outer surface side of the intermediate portion of the first leaf spring when a pushing load that is directed toward the second leaf spring in the plate thickness direction is applied to the outer surface side of the intermediate portion of the first leaf spring is relaxed. Accordingly, even in a case where the pressure spring is largely compressed and deformed in the plate thickness direction, it is possible to suppress a load generated on the intermediate portion of the first leaf spring, and it is possible to improve durability.

The residual stress described above is applied to the intermediate portion of the first leaf spring, and the intermediate portion of the second leaf spring is in an unloaded state in the length direction. Therefore, when both end portions of the first leaf spring in the length direction are connected to the second leaf spring, there is no need to take steps such as elastically deforming one leaf spring of the first leaf spring and the second leaf spring and connecting the elastically-deformed one leaf spring to the other leaf spring, and generating a tensile stress in the first specific direction on the outer surface side of the intermediate portion of the first leaf spring in a state where an elastic restoring force of the one leaf spring acts on the other leaf spring, and it is sufficient to simply connect both end portions of the first leaf spring in the length direction to the second leaf spring. Therefore, it is possible to connect both end portions of the first leaf spring in the length direction easily and accurately to the second leaf spring, and it is possible to suppress a load applied to the second leaf spring when the pressure spring is compressed and deformed in the plate thickness direction, thereby improving the durability.

The intermediate portion of the first leaf spring may be curved to have a curved shape protruding in a direction of being away from the intermediate portion of the second leaf spring in the plate thickness direction as viewed in the plate width direction, the intermediate portion of the first leaf spring may have a residual stress applied to an inner surface side thereof, which is a side of the second leaf spring in the plate thickness direction, in a direction of compressing in a direction along an inner surface of the first leaf spring as viewed in the plate width direction, and the fixed portions may extend straight in the length direction as viewed in the plate width direction.

The residual stress in the direction of compressing in the direction (hereinafter, referred to as a second specific direction) along the inner surface of the first leaf spring as viewed in the plate width direction is applied to the inner surface side of the intermediate portion of the first leaf spring. Therefore, a tensile stress in the second specific direction generated on the inner surface side of the intermediate portion of the first leaf spring when a pushing load that is directed toward the second leaf spring in the plate thickness direction is applied to the outer surface side of the intermediate portion of the first leaf spring is relaxed. Accordingly, even in a case where the pressure spring is largely compressed and deformed in the plate thickness direction, it is possible to suppress a load generated on the intermediate portion of the first leaf spring, and it is possible to improve durability.

In the intermediate portion of the first leaf spring, the residual stress in the direction of pulling in the first specific direction is applied to the outer surface side, and the residual stress in the direction of compressing in the second specific direction is applied to the inner surface side. Therefore, it is possible to easily form the first leaf spring including the intermediate portion which is curved and to which the residual stress as described above is applied.

For example, the first leaf spring can be obtained by deforming a flat plate material for the first leaf spring extending straight over the entire length in the length direction by bending the flat plate material for the first leaf spring in a plastic region such that an outer surface side of a portion that is to form the intermediate portion protrudes, by performing shot processing on an inner surface of the portion that is to form the intermediate portion of the flat plate material for the first leaf spring, or irradiating the inner surface of the portion that is to form the intermediate portion of the flat plate material for the first leaf spring with a laser.

The pressure spring may further include a third leaf spring including an intermediate portion provided on a side opposite to the first leaf spring with the intermediate portion of the second leaf spring interposed between the first leaf spring and the intermediate portion of the third leaf spring in the plate thickness direction, as viewed in the plate width direction.

The intermediate portion of the third leaf spring is provided on the side opposite to the first leaf spring with the intermediate portion of the second leaf spring interposed between the first leaf spring and the intermediate portion of the third leaf spring in the plate thickness direction, as viewed in the plate width direction. Therefore, as the intermediate portion of the first leaf spring and the intermediate portion of the third leaf spring are interposed between a pair of pressed objects in the plate thickness direction, it is possible to apply a pushing load with less variation to the first leaf spring and the third leaf spring from the pair of pressed objects, and it is possible to stabilize the posture of the pressure spring between the pair of pressed objects.

The first leaf spring and the third leaf spring may be included in an integrated plate material, two or more slits extending in the length direction may be formed in the plate material, the third leaf spring may be located at a position different from the first leaf spring in the plate width direction, and a total number of the first leaf spring and the third leaf spring formed in the plate material may be three or more.

In the plate material, the first leaf spring and the third leaf spring may be alternately provided in the plate width direction.

An arrangement of the first leaf spring and the third leaf spring may be symmetrical with respect to a center in the plate width direction.

The pressure spring may further include a fourth leaf spring including an intermediate portion in the length direction that faces the intermediate portion of the third leaf spring in a state of being spaced apart from the intermediate portion of the third leaf spring in the plate thickness direction, and is in an unloaded state in the length direction, and both end portions of at least one third leaf spring in the length direction may be connected to both end portions of the fourth leaf spring in the length direction.

The first leaf spring and the third leaf spring may have a shape that is symmetrical with respect to a center line of the second leaf spring in the plate thickness direction, and both end portions of the third leaf spring in the length direction may be connected to both end portions of the second leaf spring in the length direction.

The first leaf spring and the third leaf spring have a continuous outer periphery when viewed in the plate width direction, and inner peripheral surfaces of both end portions of the first leaf spring in the length direction and inner peripheral surfaces of both end portions of the third leaf spring in the length direction may be connected to both end portions of the second leaf spring in the length direction.

The first leaf spring and the second leaf spring may be formed of an integrated plate material.

A pressure spring structure according to an aspect of the present invention includes the two pressure springs described above which are provided in a state of being inverted relative to each other in the plate thickness direction, in which the second leaf springs of the two pressure springs are laminated in the plate thickness direction.

A method for manufacturing the pressure spring according to an aspect of the present invention includes a deformation step of plastically deforming a flat plate material for the first leaf spring such that an outer surface side of a portion that is to form the intermediate portion protrudes, applying a residual stress, to the outer surface side of the intermediate portion of the first leaf spring, in the direction of pulling in the direction along the outer surface of the first leaf spring as viewed in the plate width direction, and applying a residual stress, to an inner surface side of the intermediate portion of the first leaf spring, in a direction of compressing in a direction along an inner surface of the first leaf spring as viewed in the plate width direction, and a connecting step of laminating and connecting both end portions of the first leaf spring in the length direction to the second leaf spring in the plate thickness direction while maintaining the intermediate portion of the second leaf spring in an unloaded state in the length direction.

The deformation step and the connecting step are provided. Therefore, it is possible to reliably obtain the pressure spring in which the residual stress in the direction of pulling in the first specific direction is applied to the outer surface side of the intermediate portion of the first leaf spring, the residual stress in the direction of compressing in the second specific direction is applied to the inner surface side, and the intermediate portion of the second leaf spring is in an unloaded state in the length direction.

A method for manufacturing the pressure spring according to another aspect of the present invention includes a slit formation step of forming two or more slits extending in the length direction in a flat plate material with at least one end of the flat plate material remaining, to form a total of three or more first region and second region, a deformation step of plastically deforming the first region such that an outer surface side of a portion that is to form the intermediate portion of the first leaf spring protrudes, applying a residual stress, to the outer surface side of the intermediate portion of the first leaf spring, in the direction of pulling in the direction along the outer surface of the first leaf spring as viewed in the plate width direction, applying a residual stress, to an inner surface side of the intermediate portion of the first leaf spring, in a direction of compressing in a direction along an inner surface of the first leaf spring as viewed in the plate width direction, plastically deforming the second region to a side opposite to the portion that is to form the intermediate portion of the first leaf spring such that an outer surface side of a portion that is to form the intermediate portion of the third leaf spring protrudes, applying a residual stress, to an outer surface side of the intermediate portion of the third leaf spring, in a direction of pulling in a direction along an outer surface of the third leaf spring as viewed in the plate width direction, and applying a residual stress, to an inner surface side of the intermediate portion of the third leaf spring, in a direction of compressing in a direction along an inner surface of the first leaf spring as viewed in the plate width direction, and a connecting step of laminating and connecting both end portions of the first leaf spring in the length direction to both end portions of the second leaf spring in the length direction in the plate thickness direction while maintaining the intermediate portion of the second leaf spring in an unloaded state in the length direction.

A method for manufacturing the pressure spring according to another aspect of the present invention includes a slit formation step of forming two or more slits extending in the length direction in a flat plate material with at least one end of the flat plate material remaining, to form a total of three or more first region and second region, a deformation step of plastically deforming the first region such that an outer surface side of a portion that is to form the intermediate portion of the first leaf spring protrudes, applying a residual stress, to the outer surface side of the intermediate portion of the first leaf spring, in the direction of pulling in the direction along the outer surface of the first leaf spring as viewed in the plate width direction, applying a residual stress, to an inner surface side of the intermediate portion of the first leaf spring, in a direction of compressing in a direction along an inner surface of the first leaf spring as viewed in the plate width direction, plastically deforming the second region to a side opposite to the portion that is to form the intermediate portion of the first leaf spring such that an outer surface side of a portion that is to form the intermediate portion of the third leaf spring protrudes, applying a residual stress, to an outer surface side of the intermediate portion of the third leaf spring, in a direction of pulling in a direction along an outer surface of the third leaf spring as viewed in the plate width direction, and applying a residual stress, to an inner surface side of the intermediate portion of the third leaf spring, in a direction of compressing in a direction along an inner surface of the third leaf spring as viewed in the plate width direction, and a connecting step of laminating and connecting both end portions of the first leaf spring in the length direction to both end portions of the second leaf spring in the length direction, on one side in the plate thickness direction, while maintaining the intermediate portion of the second leaf spring in an unloaded state in the length direction, and laminating and connecting both end portions of the third leaf spring in the length direction to both end portions of the fourth leaf spring in the length direction, on the other side in the plate thickness direction, while maintaining the intermediate portion of the fourth leaf spring in an unloaded state in the length direction.

A method for manufacturing the pressure spring according to another aspect of the present invention includes a deformation step of plastically deforming a flat plate material for the first leaf spring such that an outer surface side of a portion that is to form the intermediate portion protrudes, applying a residual stress, to the outer surface side of the intermediate portion of the first leaf spring, in the direction of pulling in the direction along the outer surface of the first leaf spring as viewed in the plate width direction, applying a residual stress, to an inner surface side of the intermediate portion of the first leaf spring, in a direction of compressing in a direction along an inner surface of the first leaf spring as viewed in the plate width direction, plastically deforming a flat plate material for the third leaf spring such that an outer surface side of a portion that is to form the intermediate portion protrudes, applying a residual stress, to an outer surface side of the intermediate portion of the third leaf spring, in a direction of pulling in a direction along an outer surface of the third leaf spring as viewed in the plate width direction, and applying a residual stress, to an inner surface side of the intermediate portion of the third leaf spring, in a direction of compressing in a direction along an inner surface of the third leaf spring as viewed in the plate width direction, and a connecting step of laminating the first leaf spring, the second leaf spring, and the third leaf spring that protrudes in an opposite direction to the first leaf spring in the plate thickness direction, and connecting both end portions of the first leaf spring in the length direction and both end portions of the third leaf spring in the length direction to both end portions of the second leaf spring in the length direction, while maintaining the intermediate portion of the second leaf spring in an unloaded state in the length direction.

A method for manufacturing the pressure spring according to another aspect of the present invention includes a forming step of crushing a tubular material using a die such that both end portions of the tubular material in a predetermined one direction along a radial direction of the tubular material are flattened and center portions of the tubular material in the one direction are spaced apart from each other to have a protruding curved shape, to continuously form the first leaf spring and the third leaf spring, the first leaf spring and the third leaf spring having a shape that is symmetrical with respect to the one direction of the tubular material, a fitting step of fitting the second leaf spring into a space between the first leaf spring and the third leaf spring, and a connecting step of connecting both end portions of the second leaf spring in the length direction to flat portions of the first leaf spring and the third leaf spring.

A method for manufacturing the pressure spring according to another aspect of the present invention includes a forming step of crushing a tubular material using a die such that, as viewed in an axial direction of the tubular material, one side of the tubular material in a predetermined one direction along a radial direction of the tubular material is formed in a planar shape, and the other side of the tubular material in the one direction is formed such that a center portion in an orthogonal direction orthogonal to the one direction is curved to have a curved shape protruding to the other side in the one direction and both end portions in the orthogonal direction are flattened, to integrally form the first leaf spring and the second leaf spring such that a flat portion of the first leaf spring and a flat surface portion of the second leaf spring are continuous.

A method for manufacturing a pressure spring according to an aspect of the present invention is a method for manufacturing a pressure spring including a first leaf spring and a second leaf spring that extend in a length direction, in which both end portions of the first leaf spring in the length direction are laminated and connected to both end portions of the second leaf spring in the length direction in a plate thickness direction, intermediate portions of the first leaf spring and the second leaf spring in the length direction face each other in a state of being spaced apart from each other in the plate thickness direction, a length of the intermediate portion of the second leaf spring along a surface of the second leaf spring as viewed in a plate width direction is shorter than a length of the intermediate portion of the first leaf spring along a surface of the first leaf spring as viewed in the plate width direction, and the intermediate portion of the first leaf spring has a stress applied to an outer surface side thereof, which is an opposite side to the second leaf spring in the plate thickness direction, in a direction of pulling in a direction along an outer surface of the first leaf spring as viewed in the plate width direction, the method including a connecting step of connecting both end portions of the first leaf spring in the length direction to a long second leaf spring material in which a plurality of the second leaf springs are arranged integrally and consecutively in the length direction, and a cutting step of cutting at least the second leaf spring material to obtain the pressure spring, in which the connecting step and the cutting step are performed in this order.

The pressure spring includes the first leaf spring and the second leaf spring. Therefore, when the pressure spring is interposed between a pair of pressed objects in the plate thickness direction and a pushing load that is directed toward the second leaf spring in the plate thickness direction is applied to the intermediate portion of the first leaf spring, a tensile force in the length direction is applied to the second leaf spring through both end portions of the first leaf spring in the length direction.

At this time, the length of the intermediate portion of the second leaf spring along the surface of the second leaf spring as viewed in the plate width direction is shorter than the length of the intermediate portion of the first leaf spring along the surface of the first leaf spring as viewed in the plate width direction. Therefore, regardless of a material or the like of the second leaf spring, the second leaf spring limits deformation of the first leaf spring, and the spring constant of the pressure spring that appears can be increased, so that a high pressing force can be output in a space-saving manner.

The stress in the direction of pulling in the direction (hereinafter, referred to as a first specific direction) along the outer surface of the first leaf spring as viewed in the plate width direction is applied to the outer surface side of the intermediate portion of the first leaf spring, which is a side opposite to the second leaf spring in the plate thickness direction. Therefore, a compressive stress in the first specific direction generated on the outer surface side of the intermediate portion of the first leaf spring when a pushing load that is directed toward the second leaf spring in the plate thickness direction is applied to the outer surface side of the intermediate portion of the first leaf spring is relaxed, and even in a case where the pressure spring is largely compressed and deformed in the plate thickness direction, it is possible to suppress a load generated on the intermediate portion of the first leaf spring, and it is possible to improve durability.

The method for manufacturing a pressure spring includes, in this order, the connecting step of connecting both end portions of the first leaf spring in the length direction to the long second leaf spring material, and the cutting step of cutting at least the second leaf spring material to obtain the pressure spring. Therefore, a plurality of pressure springs can be efficiently manufactured, for example, as compared with a case where the first leaf spring, which has been cut to a prescribed length, is connected to the second leaf spring, which has been cut to a prescribed length.

During the connecting step, both end portions of the first leaf spring in the length direction may be connected to the second leaf spring material in a state where the stress is applied to the outer surface side of the intermediate portion of the first leaf spring in the direction of pulling in the direction along the outer surface of the first leaf spring as viewed in the plate width direction.

During the connecting step, both end portions of the first leaf spring in the length direction are connected to the second leaf spring material in a state where the stress is applied to the outer surface side of the intermediate portion of the first leaf spring in the direction of pulling in the first specific direction, and thus the pressure spring can be easily obtained.

Before the connecting step, a residual stress may be applied to the outer surface side of the intermediate portion of the first leaf spring in the direction of pulling in the direction along the outer surface of the first leaf spring as viewed in the plate width direction.

Before the connecting step, the residual stress in the direction of pulling in the first specific direction is applied to the outer surface side of the intermediate portion of the first leaf spring. Therefore, during the connecting step, it is possible to eliminate or at least suppress a force applied to the first leaf spring in order to generate the stress in the direction of pulling in the first specific direction on the outer surface side of the intermediate portion of the first leaf spring, and thus the pressure spring can be easily obtained.

In the connecting step, both end portions of the first leaf spring in the length direction may be connected to the second leaf spring material in a state where the first leaf spring is elastically deformed such that a size of the first leaf spring in the length direction is reduced

During the connecting step, both end portions of the first leaf spring in the length direction are connected to the second leaf spring material in a state where the first leaf spring is elastically deformed such that the size of the first leaf spring in the length direction is reduced. Therefore, a step of applying the residual stress in advance can be omitted.

During the connecting step, both end portions of the first leaf spring in the length direction may be connected to the second leaf spring material in a state where the second leaf spring material is pulled in the length direction

During the connecting step, both end portions of the first leaf spring in the length direction are connected to the second leaf spring material in a state where the second leaf spring material is pulled in the length direction. Therefore, a restoring force is generated in the second leaf spring cut from the second leaf spring material in the cutting step, so that the stress in the direction of pulling in the first specific direction is applied to the outer surface side of the intermediate portion of the first leaf spring. Accordingly, during the connecting step, it is possible to eliminate or at least suppress a force applied to the first leaf spring in order to generate the stress in the direction of pulling in the first specific direction on the outer surface side of the intermediate portion of the first leaf spring, and thus the pressure spring can be easily obtained.

The pressure spring may further include a third leaf spring including an intermediate portion provided on a side opposite to the first leaf spring with the intermediate portion of the second leaf spring interposed between the first leaf spring and the intermediate portion of the third leaf spring in the plate thickness direction as viewed in the plate width direction, an arrangement of the first leaf spring and the third leaf spring may be symmetrical with respect to a center of the second leaf spring in the plate thickness direction, both end portions of the third leaf spring in the length direction may be laminated and connected to both end portions of the second leaf spring in the length direction on a side opposite to the first leaf spring in the plate thickness direction, the intermediate portions of the first leaf spring, the second leaf spring, and the third leaf spring in the length direction may face each other in a state of being spaced apart from each other in the plate thickness direction, the length of the intermediate portion of the second leaf spring along the surface of the second leaf spring as viewed in the plate width direction may be shorter than the length of the intermediate portion of the first leaf spring along the surface of the first leaf spring and a length of the intermediate portion of the third leaf spring along a surface of the third leaf spring as viewed in the plate width direction, the intermediate portion of the third leaf spring may have a stress applied to an outer surface side thereof, which is an opposite side to the second leaf spring in the plate thickness direction, in a direction of pulling in a direction along an outer surface of the third leaf spring as viewed in the plate width direction, and in the connecting step, both end portions of the first leaf spring in the length direction and both end portions of the third leaf spring in the length direction may be connected to the second leaf spring material.

The pressure spring may further include a third leaf spring including an intermediate portion provided on a side opposite to the first leaf spring with the intermediate portion of the second leaf spring interposed between the first leaf spring and the intermediate portion of the third leaf spring in the plate thickness direction as viewed in the plate width direction, the first leaf spring and the third leaf spring may be included in an integrated plate material, and the third leaf spring may be located at a position different from the first leaf spring in the plate width direction, the intermediate portion of the third leaf spring may have a stress applied to an outer surface side thereof, which is an opposite side to the outer surface side of the first leaf spring, in a direction of pulling in a direction along an outer surface of the third leaf spring as viewed in the plate width direction, the method may further include, before the connecting step, a slit formation step of forming two or more slits extending in the length direction in a flat plate material with at least one end of the flat plate material remaining, to form a total of three or more first region and second region, and in the connecting step, both end portions of the first leaf spring in the length direction in the flat plate material may be connected to the second leaf spring material.

The pressure spring may further include a third leaf spring including an intermediate portion provided on a side opposite to the first leaf spring with the intermediate portion of the second leaf spring interposed between the first leaf spring and the intermediate portion of the third leaf spring in the plate thickness direction and a fourth leaf spring including an intermediate portion in the length direction that faces the intermediate portion of the third leaf spring in a state of being spaced apart from the intermediate portion of the third leaf spring in the plate thickness direction as viewed in the plate width direction, the first leaf spring and the third leaf spring may be included in an integrated plate material, and the third leaf spring may be located at a different position from the first leaf spring in the plate width direction, the intermediate portion of the third leaf spring may have a stress applied to an outer surface side thereof, which is an opposite side to the outer surface side of the first leaf spring, in a direction of pulling in a direction along an outer surface of the third leaf spring as viewed in the plate width direction, the method may further include, before the connecting step, a slit formation step of forming two or more slits extending in the length direction in a flat plate material with at least one end of the flat plate material remaining, to form a total of three or more first region and second region, in the connecting step, both end portions of the first leaf spring in the length direction in the flat plate material may be connected to the second leaf spring material, and both end portions of the third leaf spring in the length direction in the flat plate material may be connected to a long fourth leaf spring material in which a plurality of the fourth leaf springs are arranged integrally and consecutively in the length direction, and in the cutting step, at least the second leaf spring material and the fourth leaf spring material may be cut to obtain the pressure spring.

The method for manufacturing a pressure spring may further include, between the slit formation step and the connecting step, a deformation step of applying a residual stress to the outer surface side of the intermediate portion of the first leaf spring in the direction of pulling in the direction along the outer surface of the first leaf spring as viewed in the plate width direction, and applying a residual stress to the outer surface side of the intermediate portion of the third leaf spring in the direction of pulling in the direction along the outer surface of the third leaf spring as viewed in the plate width direction, which is a direction opposite to the direction of the first leaf spring.

In the connecting step, a plurality of the first leaf springs may be connected to the second leaf spring material in the length direction, and in the cutting step, the second leaf spring material may be cut at two connecting portions located at outermost positions in the length direction among connecting portions of the second leaf spring material with the plurality of first leaf springs, and then the remaining connecting portions may be cut to obtain a plurality of the pressure springs.

In the connecting step, the plurality of first leaf springs are connected to the second leaf spring material in the length direction. Therefore, it is possible to connect the plurality of first leaf springs to the second leaf spring material in a state where the same position of the second leaf spring material in the length direction is fixed, and a plurality of pressure springs can be efficiently manufactured, for example, as compared with a case where the cutting step is performed each time one first leaf spring is connected to the second leaf spring material.

During the cutting step, as a first cutting, the second leaf spring material is cut at two connecting portions located at the outermost positions in the length direction among the connecting portions of the second leaf spring material with the plurality of first leaf springs, and then as a second cutting, the remaining connecting portions are cut to obtain the plurality of pressure springs. Therefore, it is possible to move, from a connecting machine used during the connecting step to a cutting machine used in the second cutting, a connected body of the pressure springs having the cut second leaf spring material to which the plurality of first leaf springs are connected. As a result, the plurality of pressure springs can be efficiently manufactured, for example, by performing the connecting step and the second cutting in the cutting step in parallel.

In the connecting step, both end portions of the first leaf spring in the length direction included in a long first leaf spring material, in which a plurality of the first leaf springs are arranged integrally and consecutively in the length direction, may be connected to the second leaf spring material, and in the cutting step, the second leaf spring material may be cut together with the first leaf spring material.

In the cutting step, the second leaf spring material is cut together with the first leaf spring material to obtain the pressure spring, so that the plurality of pressure springs can be efficiently manufactured.

### Advantageous Effects of Invention

According to the aspects of the present invention, it is possible to output a high pressing force in a space-saving manner.

### BRIEF DESCRIPTION OF DRAWINGS

[FIG. 1A] A perspective view of a pressure spring according to a first embodiment.
[FIG. 1B] A diagram of the pressure spring of FIG. 1A as viewed in a plate width direction.
[FIG. 2] A flowchart of a method for manufacturing a pressure spring according to the first embodiment.
[FIG. 3] A perspective view of a pressure spring according to a second embodiment.
[FIG. 4] A diagram of the pressure spring of FIG. 3 as viewed in a plate width direction.
[FIG. 5] A flowchart of a method for manufacturing a pressure spring according to the second embodiment.
[FIG. 6] A diagram showing a slit formation step in the method for manufacturing a pressure spring according to the second embodiment.
[FIG. 7] A perspective view of a pressure spring according to a third embodiment.
[FIG. 8A] A perspective view of a pressure spring according to a fourth embodiment.
[FIG. 8B] A diagram of the pressure spring of FIG. 8A as viewed in a plate width direction.
[FIG. 9] A flowchart of a method for manufacturing a pressure spring according to the fourth embodiment.
[FIG. 10A] A perspective view of a pressure spring according to a fifth embodiment.
[FIG. 10B] A diagram of the pressure spring of FIG. 10A as viewed in a plate width direction.
[FIG. 11A] A diagram showing a method for manufacturing a pressure spring according to the fifth embodiment.
[FIG. 11B] A diagram showing the method for manufacturing a pressure spring according to the fifth embodiment.
[FIG. 11C] A diagram showing the method for manufacturing a pressure spring according to the fifth embodiment.
[FIG. 11D] A diagram showing the method for manufacturing a pressure spring according to the fifth embodiment.
[FIG. 12A] A perspective view of a pressure spring according to a sixth embodiment.
[FIG. 12B] A diagram of the pressure spring of FIG. 12A as viewed in a plate width direction.
[FIG. 13A] A diagram showing a method for manufacturing a pressure spring according to the sixth embodiment.
[FIG. 13B] A diagram showing the method for manufacturing a pressure spring according to the sixth embodiment.
[FIG. 13C] A diagram showing the method for manufacturing a pressure spring according to the sixth embodiment.
[FIG. 14A] A perspective view of a pressure spring structure according to a seventh embodiment.
[FIG. 14B] A diagram of the pressure spring structure of FIG. 14A as viewed in a plate width direction.
[FIG. 15] A diagram showing a connecting step in a manufacturing method according to an eighth embodiment.
[FIG. 16] A diagram showing a cutting step in the manufacturing method according to the eighth embodiment.
[FIG. 17] A diagram showing a connecting step in a manufacturing method according to a ninth embodiment.
[FIG. 18] A diagram showing a cutting step of in manufacturing method according to the ninth embodiment.
[FIG. 19] A diagram showing a state immediately before connecting in a connecting step in a manufacturing method according to a tenth embodiment.
[FIG. 20] A diagram showing a connecting step in a manufacturing method according to an eleventh embodiment.
[FIG. 21] A diagram showing a connecting step in a manufacturing method according to a twelfth embodiment.
[FIG. 22] A diagram showing a connecting step in a manufacturing method according to a thirteenth embodiment.
[FIG. 23] A diagram showing a connecting step in a manufacturing method according to a fourteenth embodiment.
[FIG. 24] A diagram showing a first cutting in a cutting step in a manufacturing method according to a fifteenth embodiment.
[FIG. 25] A diagram showing a second cutting in the cutting step in the manufacturing method according to the fifteenth embodiment.
[FIG. 26] A diagram showing a slit formation step in a manufacturing method to a sixteenth embodiment.
[FIG. 27] A diagram showing a state immediately before connecting in a connecting step of a manufacturing method according to a sixteenth embodiment.
[FIG. 28] A diagram showing a state immediately before connecting in a connecting step of a manufacturing method according to a seventeenth embodiment.

### DESCRIPTION OF EMBODIMENTS

### (First Embodiment)

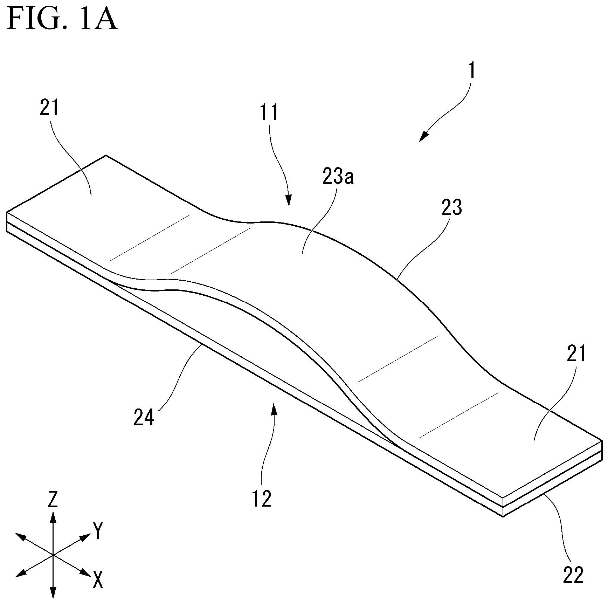

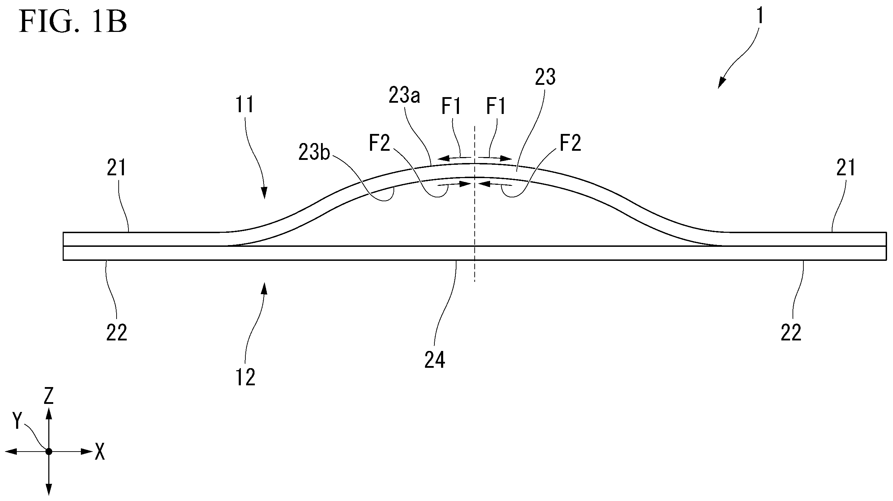

Hereinafter, a pressure spring 1 according to a first embodiment of the present invention will be described with reference to FIGS. 1A and 1B.

As shown in FIGS. 1A and 1B, the pressure spring 1 of the present embodiment includes a first leaf spring 11 and a second leaf spring 12 extending in a length direction X, and is used by being interposed between a pair of pressed objects in a plate thickness direction Z.

Both end portions of the first leaf spring 11 in the length direction X and both end portions of the second leaf spring 12 in the length direction X are laminated and connected to each other in the plate thickness direction Z by, for example, brazing, adhesion, welding, ultrasonic bonding, or the like. Both end portions of the first leaf spring 11 in the length direction X and both end portions of the second leaf spring 12 in the length direction X extend straight in the length direction X.

Hereinafter, both end portions of the first leaf spring 11 in the length direction X are referred to as first fixed portions (fixed portions) 21, and both end portions of the second leaf spring 12 in the length direction X are referred to as second fixed portions (fixed portions) 22.

The sizes of the first leaf spring 11 and the second leaf spring 12 in the length direction X are the same as each other. Both end edges of the first leaf spring 11 are connected to both end edges of the second leaf spring 12 in the plate thickness direction Z without any steps. Note that the sizes of the first leaf spring 11 and the second leaf spring 12 in the length direction X may be different from each other, and both end edges of the first leaf spring 11 may be connected to both end edges of the second leaf spring 12 in the plate thickness direction Z via a step.

Intermediate portions 23 and 24 of the first leaf spring 11 and the second leaf spring 12 in the length direction X face each other in a state of being spaced apart from each other in the plate thickness direction Z. The length of the intermediate portion 24 of the second leaf spring 12 along a surface of the second leaf spring 12 as viewed in a plate width direction Y is shorter than the length of the intermediate portion 23 of the first leaf spring 11 along a surface of the first leaf spring 11 as viewed in the plate width direction Y.

The intermediate portion 23 of the first leaf spring 11 is curved to have a curved shape protruding in a direction of being away from the intermediate portion 24 of the second leaf spring 12 in the plate thickness direction Z as viewed in the plate width direction Y. Note that the intermediate portion of the first leaf spring 11 may be curved to have a trapezoidal shape, rectangular shape, triangular shape, or the like (each of which may have rounded corners) protruding in a direction of being away from the intermediate portion 24 of the second leaf spring 12 in the plate thickness direction Z as viewed in the plate width direction Y.

The second leaf spring 12 extends straight in the length direction X over the entire length in the length direction X as viewed in the plate width direction Y. The intermediate portion 24 of the second leaf spring 12 may be curved to have a curved shape protruding in a direction of approaching the intermediate portion 23 of the first leaf spring 11 in the plate thickness direction Z, or in a direction of being away from the intermediate portion 23 of the first leaf spring 11 in the plate thickness direction Z, as viewed in the plate width direction Y.

The intermediate portion 23 of the first leaf spring 11 has a residual stress F1 applied to an outer surface 23a side, which is an opposite side to the second leaf spring 12 in the plate thickness direction Z, in a direction of pulling in a direction along the outer surface 23a as viewed in the plate width direction Y. Note that the stress applied to the outer surface 23a side of the intermediate portion 23 in the direction of pulling in the direction along the outer surface 23a as viewed in the plate width direction Y may be a tensile stress generated on the outer surface 23a side of the intermediate portion 23 in a state in which the first leaf spring 11 is compressed and deformed in the length direction X within the elastic range.

The intermediate portion 23 of the first leaf spring 11 has a residual stress F2 applied to an inner surface 23b side, which is a side of the second leaf spring 12 in the plate thickness direction Z, in a direction of compressing in a direction along the inner surface 23b as viewed in the plate width direction Y. Note that the stress applied to the outer surface 23a side of the intermediate portion 23 in the direction of pulling in the direction along the outer surface 23a as viewed in the plate width direction Y may be a compressive stress generated on the inner surface 23b side of the intermediate portion 23 in a state in which the first leaf spring 11 is compressed and deformed in the length direction X within the elastic range.

The residual stress F1 applied to the outer surface 23a side of the intermediate portion 23 of the first leaf spring 11 decreases toward the inner surface 23b side of the intermediate portion 23 of the first leaf spring 11 in the plate thickness direction Z. The residual stress F2 applied to the inner surface 23b side of the intermediate portion 23 of the first leaf spring 11 decreases toward the outer surface 23a side of the intermediate portion 23 of the first leaf spring 11 in the plate thickness direction Z. An intermediate part of the intermediate portion 23 of the first leaf spring 11 in the plate thickness direction Z includes a region having no residual stress.

The intermediate portion 24 of the second leaf spring 12 has no residual stress in the length direction X over the entire region, and no force in the length direction X is applied to the intermediate portion 24 from the first leaf spring 11. That is, the intermediate portion 24 of the second leaf spring 12 is in an unloaded state in the length direction X.

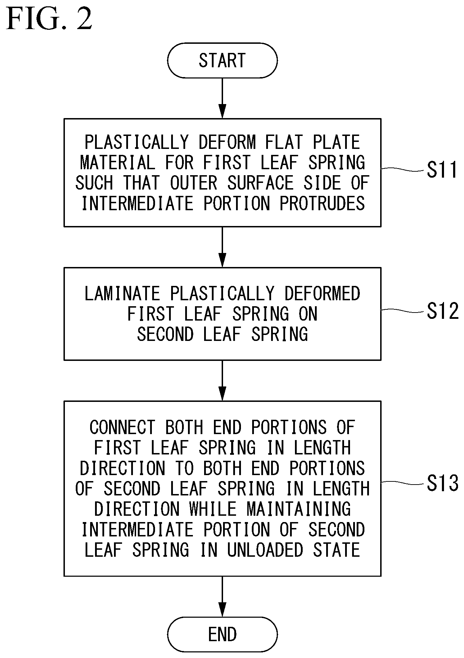

Next, a method for manufacturing the pressure spring 1 configured as described above will be described with reference to FIG. 2. The method for manufacturing the pressure spring 1 of the present embodiment includes a deformation step and a connecting step.

First, in the deformation step, for example, a flat plate material for the first leaf spring 11 extending straight over the entire length in the length direction X is plastically deformed such that the outer surface 23a side of a portion that is to form the intermediate portion 23 protrudes (step S11). In this case, in the flat plate material for the first leaf spring 11, portions that are to form the first fixed portions 21 are supported to maintain a shape extending straight in the length direction X, and move to be contracted in the length direction X in accordance with the plastic deformation of the portion that is to form the intermediate portion 23 in a convex shape.

As a result, the first leaf spring 11 including the intermediate portion 23 which is curved and to which the residual stress as described above is applied is obtained.

Next, in the connecting step, first, the plastically-deformed first leaf spring 11 is laminated on the second leaf spring 12 that extends straight over the entire length in the length direction X and is in an unloaded state in the length direction X (step S12). Then, the second fixed portions 22 of the second leaf spring 12 (both end portions of the second leaf spring 12 in the length direction X) are connected to the first fixed portions 21 of the first leaf spring 11 (both end portions of the first leaf spring 11 in the length direction X) (step S13). In this case, the first leaf spring 11 and the second leaf spring 12 are not subjected to a force in the length direction X, the intermediate portion 24 of the second leaf spring 12 is maintained in an unloaded state in the length direction X, and the first fixed portions 21 of the first leaf spring 11 and the second fixed portions 22 of the second leaf spring 12 are simply laminated and connected to each other in the plate thickness direction Z. Here, in a case of connecting the fixed portions 21 and 22, which are both end regions having a certain range, the entire flat portion of the fixed portions 21 and 22 may be connected, or only a part of the fixed portions 21 and 22 may be connected in a strip shape, a frame shape, or the like.

Therefore, the shape of the first leaf spring **11** including the intermediate portion 23 which is curved and to which the residual stress as described above is applied and the shape of the second leaf spring 12 extending straight over the entire length in the length direction X are the same and do not change before and after the first fixed portions 21 of the first leaf spring 11 and the second fixed portions 22 of the second leaf spring 12 are connected to each other.

As described above, the pressure spring 1 according to the present embodiment includes the first leaf spring 11 and the second leaf spring 12 that extend in the length direction X. Both end portions of the first leaf spring 11 in the length direction X are the first fixed portions 21 laminated and connected to the second leaf spring 12 in the plate thickness direction Z. The intermediate portions 23 and 24 of the first leaf spring 11 and the second leaf spring 12 in the length direction X face each other in a state of being spaced apart from each other in the plate thickness direction Z. The length of the intermediate portion 24 of the second leaf spring 12 along the surface of the second leaf spring 12 as viewed in the plate width direction Y is shorter than the length of the intermediate portion 23 of the first leaf spring 11 along the surface of the first leaf spring 11 as viewed in the plate width direction Y. The intermediate portion 23 of the first leaf spring 11 has the residual stress applied to the outer surface 23a side thereof, which is an opposite side to the second leaf spring 12 in the plate thickness direction Z, in the direction of pulling in the direction along the outer surface 23a of the first leaf spring 11 as viewed in the plate width direction Y. The intermediate portion 24 of the second leaf spring 12 is in an unloaded state in the length direction X.

According to the pressure spring 1 of the present embodiment, the first leaf spring 11 and the second leaf spring 12 are included. Therefore, when the pressure spring 1 is interposed between a pair of pressed objects in the plate thickness direction Z and a pushing load that is directed toward the second leaf spring 12 in the plate thickness direction Z is applied to the intermediate portion 23 of the first leaf spring 11, a tensile force in the length direction X is applied to the second leaf spring 12 through the first fixed portions 21 of the first leaf spring 11.

At this time, the length of the intermediate portion 24 of the second leaf spring 12 along the surface of the second leaf spring 12 as viewed in the plate width direction Y is shorter than the length of the intermediate portion 23 of the first leaf spring 11 along the surface of the first leaf spring 11 as viewed in the plate width direction Y. Therefore, regardless of a material or the like of the second leaf spring 12, the second leaf spring 12 limits deformation of the first leaf spring 11, and the spring constant of the pressure spring 1 that appears can be increased, so that a high pressing force can be output in a space-saving manner.

Further, the residual stress in the direction of pulling in the direction (hereinafter, referred to as a first specific direction) along the outer surface 23a as viewed in the plate width direction Y is applied to the outer surface 23a side of the intermediate portion 23 of the first leaf spring 11. Therefore, a compression stress in the first specific direction generated on the outer surface 23a side of the intermediate portion 23 when a pushing load that is directed toward the second leaf spring 12 in the plate thickness direction Z is applied to the outer surface 23a side of the intermediate portion 23 is relaxed. Accordingly, even in a case where the pressure spring 1 is largely compressed and deformed in the plate thickness direction Z, it is possible to suppress a load generated on the intermediate portion 23 of the first leaf spring 11, and it is possible to improve durability.

The residual stress described above is applied to the intermediate portion 23 of the first leaf spring 11, and the intermediate portion 24 of the second leaf spring 12 is in an unloaded state in the length direction X. Therefore, when both end portions of the first leaf spring 11 in the length direction X are connected to the second leaf spring 12, there is no need to take steps such as elastically deforming one leaf spring of the first leaf spring 11 and the second leaf spring 12 and connecting the elastically-deformed one leaf spring to the other leaf spring, and generating a tensile stress in the first specific direction on the outer surface 23a side of the intermediate portion 23 of the first leaf spring 11 in a state where an elastic restoring force of the one leaf spring acts on the other leaf spring, and it is sufficient to simply connect both end portions of the first leaf spring 11 in the length direction X to the second leaf spring 12. Therefore, it is possible to connect both end portions of the first leaf spring 11 in the length direction X easily and accurately to the second leaf spring 12, and it is possible to suppress a load applied to the second leaf spring 12 when the pressure spring 1 is compressed and deformed in the plate thickness direction Z, thereby improving the durability.

In addition, the intermediate portion 23 of the first leaf spring 11 is curved to have a curved shape protruding in a direction of being away from the intermediate portion 24 of the second leaf spring 12 in the plate thickness direction Z as viewed in the plate width direction Y. The intermediate portion 23 of the first leaf spring 11 has the residual stress applied to the inner surface 23b side thereof, which is a side of the second leaf spring 12 in the plate thickness direction Z, in the direction of compressing in the direction along the inner surface 23b of the first leaf spring 11 as viewed in the plate width direction Y. The first fixed portions 21 extend straight in the length direction X as viewed in the plate width direction Y.

The residual stress in the direction of compressing in the direction (hereinafter, referred to as a second specific direction) along the inner surface 23b as viewed in the plate width direction Y is applied to the inner surface 23b side of the intermediate portion 23 of the first leaf spring 11. Therefore, a tensile stress in the second specific direction generated on the inner surface 23b side when a pushing load that is directed toward the second leaf spring 12 in the plate thickness direction Z is applied to the outer surface 23a side of the intermediate portion 23 is relaxed. Accordingly, even in a case where the pressure spring 1 is largely compressed and deformed in the plate thickness direction Z, it is possible to suppress a load generated on the intermediate portion 23 of the first leaf spring **11,** and it is possible to improve durability.

In the intermediate portion 23 of the first leaf spring 11, the residual stress in the direction of pulling in the first specific direction is applied to the outer surface 23a side, and the residual stress in the direction of compressing in the second specific direction is applied to the inner surface 23b side. Therefore, it is possible to easily form the first leaf spring 11 including the intermediate portion 23 which is curved and to which the residual stress as described above is applied.

For example, the first leaf spring 11 can be obtained by deforming the flat plate material for the first leaf spring 11 extending straight over the entire length in the length direction X by bending the flat plate material for the first leaf spring 11 in a plastic region such that the outer surface 23a side of the portion that is to form the intermediate portion 23 protrudes, by performing shot processing on the inner surface 23b of the portion that is to form the intermediate portion 23 of the flat plate material for the first leaf spring 11, irradiating the inner surface 23b of the portion that is to form the intermediate portion 23 of the flat plate material for the first leaf spring 11 with a laser, or the like.

The method for manufacturing the pressure spring 1 according to the present embodiment includes a deformation step of plastically deforming the flat plate material for the first leaf spring 11 such that the outer surface 23a side of the portion that is to form the intermediate portion 23 protrudes, applying the residual stress, to the outer surface 23a side of the intermediate portion 23 of the first leaf spring 11, in the direction of pulling in the direction along the outer surface 23a of the first leaf spring 11 as viewed in the plate width direction Y, and applying the residual stress, to the inner surface 23b side of the intermediate portion 23 of the first leaf spring 11, in the direction of compressing in the direction along the inner surface 23b of the first leaf spring 11 as viewed in the plate width direction Y, and a connecting step of laminating and connecting both end portions of the first leaf spring 11 in the length direction X to the second leaf spring 12 in the plate thickness direction Z while maintaining the intermediate portion 24 of the second leaf spring 12 in an unloaded state in the length direction X.

The method for manufacturing the pressure spring 1 includes the deformation step and the connecting step. Therefore, it is possible to reliably obtain the pressure spring 1 in which the residual stress in the direction of pulling in the first specific direction is applied to the outer surface 23a side of the intermediate portion 23 of the first leaf spring 11, the residual stress in the direction of compressing in the second specific direction is applied to the inner surface 23b side, and the intermediate portion 24 of the second leaf spring 12 is in an unloaded state in the length direction X.

### (Second Embodiment)

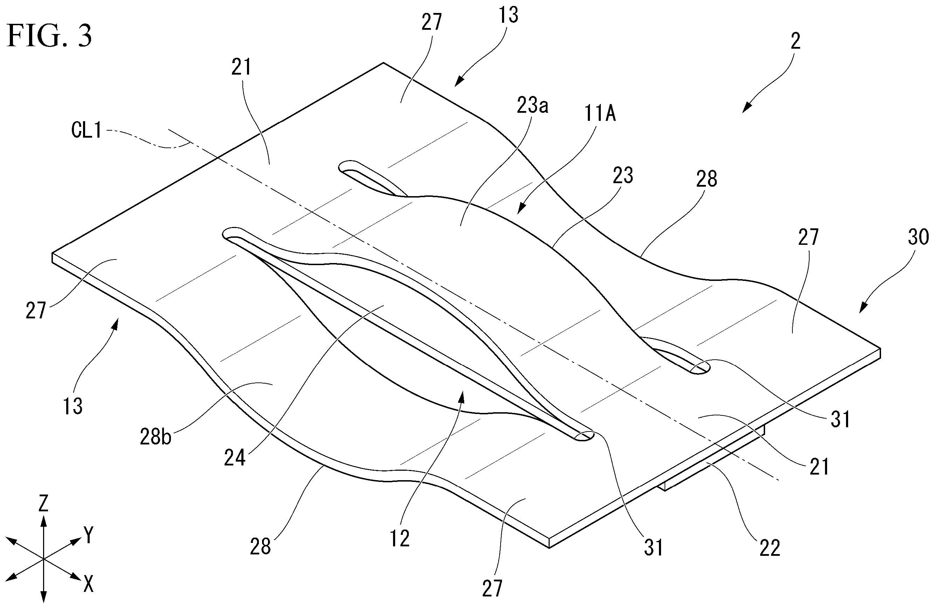

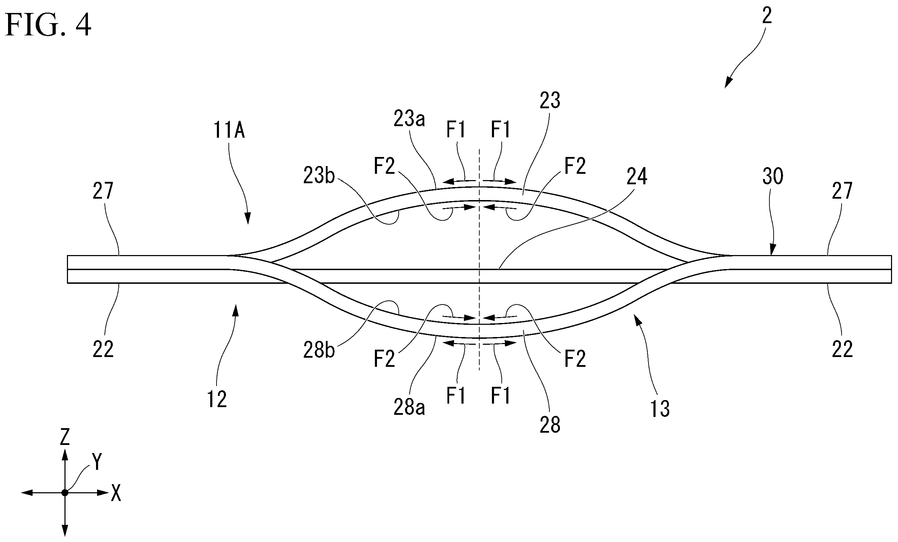

Next, a pressure spring 2 according to a second embodiment of the present invention will be described with reference to FIGS. 3 and 4.

In the second embodiment, the same portions as the components in the first embodiment will be designated by the same reference signs, and a description thereof will be omitted, and only different points will be described.

As shown in FIGS. 3 and 4, the pressure spring 2 of the present embodiment includes a third leaf spring 13 including an intermediate portion 28 provided on a side opposite to the intermediate portion 23 of a first leaf spring 11A with the intermediate portion 24 of the second leaf spring 12 interposed between the intermediate portion 23 of the first leaf spring 11A and the intermediate portion 28 of the third leaf spring 13 in the plate thickness direction Z, as viewed in the plate width direction Y. The intermediate portions 24 and 28 of the second leaf spring 12 and the third leaf spring 13 are spaced apart from each other in the plate thickness direction Z as viewed in the plate width direction Y.

In the example shown in the drawings, the third leaf springs 13 are provided on both sides of the first leaf spring 11A with the first leaf spring 11A interposed between the third leaf springs 13 in the plate width direction Y. Both end portions of the third leaf spring 13 in the length direction X extend straight in the length direction X, are integrally formed with the first fixed portion 21 of the first leaf spring 11A, and protrude from the first fixed portion 21 in the plate width direction Y. The first leaf spring 11A and the third leaf spring 13 are formed of one plate material 30 having the same plate thickness over the entire region.

Both end portions of the third leaf spring 13 in the length direction X are flat portions 27 that extend straight in the length direction X as viewed in the plate width direction Y.

The intermediate portion 28 of the third leaf spring 13 joins the flat portions 27 positioned at both end portions of the third leaf spring 13 in the length direction X, in the length direction X. The intermediate portion 28 of the third leaf spring 13 is curved to have a curved shape protruding in a direction of being away from the intermediate portion 23 of the first leaf spring 11A in the plate thickness direction Z as viewed in the plate width direction Y. A center portion of the intermediate portion 28 of the third leaf spring 13 in the length direction X is positioned on a side opposite to the intermediate portion 23 of the first leaf spring 11A with the intermediate portion 24 of the second leaf spring 12 interposed between the intermediate portion 23 of the first leaf spring 11A and the center portion of the intermediate portion 28 of the third leaf spring 13 in the plate thickness direction Z, as viewed in the plate width direction Y.

The intermediate portions 28 and 23 of the third leaf spring 13 and the first leaf spring 11A have a symmetrical shape with respect to a straight line that passes through a center portion of the first fixed portion 21 and the flat portion 27 in the plate thickness direction Z and extends in the length direction X, as viewed in the plate width direction Y. The sizes of the intermediate portions 28 and 23 of the third leaf spring 13 and the first leaf spring 11A are the same as each other.

The intermediate portions 23 and 28 of the first leaf spring 11A and the third leaf spring 13 have the residual stress F1 applied to the outer surfaces 23a and 28a side, which is an opposite side to the second leaf spring 12 in the plate thickness direction Z, in a direction of pulling in a direction along the outer surfaces 23a and 28a as viewed in the plate width direction Y, respectively. Note that the stress applied to the outer surfaces 23a and 28b side of the intermediate portions 23 and 28 of the first leaf spring 11A and the third leaf spring 13 in the direction of pulling in the direction along the outer surfaces 23a and 28a as viewed in the plate width direction Y may be a tensile stress generated on the outer surfaces 23a and 28a side of the intermediate portions 23 and 28 in a state in which the first leaf spring 11A and the third leaf spring 13 are compressed and deformed in the length direction X within the elastic range.

The intermediate portions 23 and 28 of the first leaf spring 11A and the third leaf spring 13 have the residual stress F2 applied to the inner surfaces 23b and 28b side, which is a side of the second leaf spring 12 in the plate thickness direction Z, in a direction of compressing in a direction along the inner surfaces 23b and 28b as viewed in the plate width direction Y, respectively. Note that the stress applied to the inner surfaces 23b and 28b side of the intermediate portions 23 and 28 of the first leaf spring 11A and the third leaf spring 13 in the direction of pulling in the direction along the inner surfaces 23b and 28b as viewed in the plate width direction Y may be a compressive stress generated on the inner surfaces 23b and 28b side of the intermediate portions 23 and 28 in a state in which the first leaf spring 11A and the third leaf spring 13 are compressed and deformed in the length direction X within the elastic range.

The residual stress F1 applied to the outer surface 23a side of the intermediate portion 23 of the first leaf spring 11A decreases toward the inner surface 23b side of the intermediate portion 23 of the first leaf spring 11A in the plate thickness direction Z. The residual stress F2 applied to the inner surface 23b side of the intermediate portion 23 of the first leaf spring 11A decreases toward the outer surface 23a side of the intermediate portion 23 of the first leaf spring 11A in the plate thickness direction Z. An intermediate part of the intermediate portion 23 of the first leaf spring 11A in the plate thickness direction Z includes a region having no residual stress.

The residual stress F1 applied to the outer surface 28a side of the intermediate portion 28 of the third leaf spring 13 decreases toward the inner surface 28b side of the intermediate portion 28 of the third leaf spring 13 in the plate thickness direction Z. The residual stress F2 applied to the inner surface 28b side of the intermediate portion 28 of the third leaf spring 13 decreases toward the outer surface 28a side of the intermediate portion 28 of the third leaf spring 13 in the plate thickness direction Z. An intermediate part of the intermediate portion 28 of the third leaf spring 13 in the plate thickness direction Z includes a region having no residual stress.

The distribution and the magnitude of the residual stress in the intermediate portions 23 and 28 of the first leaf spring 11A and the third leaf spring 13 are the same as each other. The distribution and the magnitude of the residual stress in the intermediate portions 23 and 28 of the first leaf spring 11A and the third leaf spring 13 may be different from each other.

The intermediate portion 24 of the second leaf spring 12 has no residual stress in the length direction X over the entire region, and no force in the length direction X is applied to the intermediate portion 24 from the first leaf spring 11A and the third leaf spring 13. That is, the intermediate portion 24 of the second leaf spring 12 is in an unloaded state in the length direction X.

The first leaf spring 11A and the third leaf spring 13 are included in the integrated plate material 30. Two or more slits 31 extending in the length direction X are formed in the plate material 30. The third leaf spring 13 is located at a position different from the first leaf spring 11A in the plate width direction Y. A total number of the first leaf spring 11A and the third leaf spring 13 formed in the plate material 30 is three or more.

In the example shown in the drawings, in the plate material 30, two slits 31 are provided, and a total of three first leaf spring 11A and third leaf springs 13 are formed. However, the present invention is not limited thereto. The number of the slits 31 may be three or more, and the total number of the first leaf spring 11A and the third leaf spring 13 may be four or more.

In the plate material 30, the first leaf spring 11A and the third leaf spring 13 are alternately provided in the plate width direction Y.

In the example shown in the drawings, a configuration in which the first leaf spring 11A and the third leaf spring 13 are alternately provided is shown. However, the present invention is not limited thereto. In the plate material 30, the first leaf spring 11A and the third leaf spring 13 may not be alternately provided. For example, in the plate material 30, in a case where three slits 31 are formed and two first leaf springs 11A and two third leaf springs 13 are provided, for example, the first leaf spring 11A, the third leaf spring 13, the third leaf spring 13, and the first leaf spring 11A may be arranged in this order in the plate width direction Y.

The arrangement of the first leaf spring 11A and the third leaf spring 13 is symmetrical with respect to the center in the plate width direction Y (that is, a center line CL1 which is a straight line passing through the center of the pressure spring 2 in the plate width direction Y and extending in the length direction X, shown in FIG. 3).

In FIG. 3, an example is shown in which the first leaf spring 11A is located between two third leaf springs 13 so that the arrangement of the first leaf spring 11A and the third leaf spring 13 is symmetrical with respect to the center in the plate width direction Y. For example, in a case where five slits 31 are provided and a total of six first leaf springs 11A and third leaf springs 13 are formed in the plate material 30, it is preferable that the arrangement of the first leaf spring 11A and the third leaf spring 13 is symmetrical with respect to the center in the plate width direction Y by, for example, arranging the first leaf spring 11A, the third leaf spring 13, the first leaf spring 11A, the first leaf spring 11A, the third leaf spring 13, and the first leaf spring 11A in this order in the plate width direction Y.

In addition, the arrangement of the first leaf spring 11A and the third leaf spring 13 may not be symmetrical with respect to the center in the plate width direction Y as viewed in the length direction X, when the pressure spring 2 presses the pressed object. The arrangement of the first leaf spring 11A and the third leaf spring 13 may be asymmetrical as long as the moments around the length direction X are balanced when the pressure spring 2 is interposed between the pressed objects. The moment being balanced is not limited to a completely balanced state and may include a general error in industry.

In addition, it is preferable that the total dimension of the first leaf springs 11A in the plate width direction Y and the total dimension of the third leaf spring 13 in the plate width direction Y are (substantially) the same.

In the present embodiment, the residual stress in the direction of pulling in the direction (hereinafter, referred to as the first specific direction) along the outer surfaces 23a and 28a as viewed in the plate width direction Y is applied to the outer surfaces 23a and 28a side of the intermediate portions 23 and 28 of the first leaf spring 11A and the third leaf spring 13. Therefore, a compression stress in the first specific direction generated on the outer surfaces 23a and 28a side of the intermediate portions 23 and 28 when a pushing load that is directed toward the second leaf spring 12 in the plate thickness direction Z is applied to the outer surfaces 23a and 28a side of the intermediate portions 23 and 28 is relaxed. Accordingly, even in a case where the pressure spring 2 is largely compressed and deformed in the plate thickness direction Z, it is possible to suppress a load generated on the intermediate portions 23 and 28 of the first leaf spring 11A and the third leaf spring 13, and it is possible to improve the durability.

The residual stress described above is applied to the intermediate portion 23 of the first leaf spring 11A, and the intermediate portion 24 of the second leaf spring 12 is in an unloaded state in the length direction X. Therefore, when both end portions of the first leaf spring 11A in the length direction X are connected to the second leaf spring 12, there is no need to take steps such as elastically deforming one leaf spring of the first leaf spring 11A and the second leaf spring 12 and connecting the elastically-deformed one leaf spring to the other leaf spring, and generating a tensile stress in the first specific direction on the outer surface 23a side of the intermediate portion 23 of the first leaf spring 11A in a state where an elastic restoring force of the one leaf spring acts on the other leaf spring, and it is sufficient to simply connect both end portions of the first leaf spring 11A in the length direction X to the second leaf spring 12. Therefore, it is possible to connect both end portions of the first leaf spring 11 A in the length direction X easily and accurately to the second leaf spring 12, and it is possible to suppress a load applied to the second leaf spring 12 when the pressure spring 2 is compressed and deformed in the plate thickness direction Z, thereby improving the durability.

The residual stress in the direction of compressing in the direction (hereinafter, referred to as the second specific direction) along the inner surfaces 23b and 28b as viewed in the plate width direction Y is applied to the inner surfaces 23b and 28b side of the intermediate portions 23 and 28 of the first leaf spring 11A and the third leaf spring 13. Therefore, a tensile stress in the second specific direction generated on the inner surfaces 23b and 28b side when a pushing load that is directed toward the second leaf spring 12 in the plate thickness direction Z is applied to the outer surfaces 23a and 28a side of the intermediate portions 23 and 28 is relaxed. Accordingly, even in a case where the pressure spring 2 is largely compressed and deformed in the plate thickness direction Z, it is possible to suppress a load generated on the intermediate portions 23 and 28 of the first leaf spring 11A and the third leaf spring 13, and it is possible to improve the durability.

In the intermediate portions 23 and 28 of the first leaf spring 11A and the third leaf spring 13, the residual stress in the direction of pulling in the first specific direction is applied to the outer surfaces 23a and 28a side, and the residual stress in the direction of compressing in the second specific direction is applied to the inner surfaces 23b and 28b side. Therefore, it is possible to easily form the first leaf spring 11A and the third leaf spring 13 including the intermediate portions 23 and 28 which are curved and to which the residual stress as described above is applied.

For example, the first leaf spring 11A and the third leaf spring 13 can be obtained by deforming the flat plate material for the first leaf spring 11A and the flat plate material for the third leaf spring 13 extending straight over the entire length in the length direction X by bending the flat plate material for the first leaf spring 11A and the flat plate material for the third leaf spring 13 in a plastic region such that the outer surfaces 23a and 28a side of the portion that is to form the intermediate portions 23 and 28 protrudes, by performing shot processing on the inner surfaces 23b and 28b of the portions that are to form the intermediate portions 23 and 28 of the flat plate material for the first leaf spring 11A and the flat plate material for the third leaf spring 13, irradiating the inner surfaces 23b and 28b of the portions that are to form the intermediate portions 23 and 28 of the flat plate material for the first leaf spring 11A and the flat plate material for the third leaf spring 13 with a laser, or the like.

The intermediate portion 28 of the third leaf spring 13 is provided on the side opposite to the intermediate portion 23 of the first leaf spring 11A with the intermediate portion 24 of the second leaf spring 12 interposed between the intermediate portion 23 of the first leaf spring 11A and the intermediate portion 28 of the third leaf spring 13 in the plate thickness direction Z, as viewed in the plate width direction Y. Therefore, as the intermediate portion 23 of the first leaf spring 11A and the intermediate portion 28 of the third leaf spring 13 are interposed between a pair of pressed objects in the plate thickness direction Z, it is possible to apply a pushing load with less variation to the first leaf spring 11A and the third leaf spring 13 from the pair of pressed objects, and it is possible to stabilize the posture of the pressure spring 2 between the pair of pressed objects.

In the example shown in FIG. 3, the second leaf spring 12 is provided only in a portion overlapping the first leaf spring 11A as viewed in the plate thickness direction Z, and does not extend outside the first leaf spring 11A in the plate width direction Y. However, the present invention is not limited thereto. Both end portions of the second leaf spring 12 in the length direction X may extend outside the first leaf spring 11A in the plate width direction Y to face the flat portions 27 of the third leaf spring 13. That is, both end portions of the second leaf spring 12 in the length direction X may extend to overlap the flat portions 27 of the third leaf spring 13 as viewed in the plate thickness direction Z. In that case, it is preferable that the extended portion of the second leaf spring 12 is connected to the flat portion 27 of the third leaf spring 13.

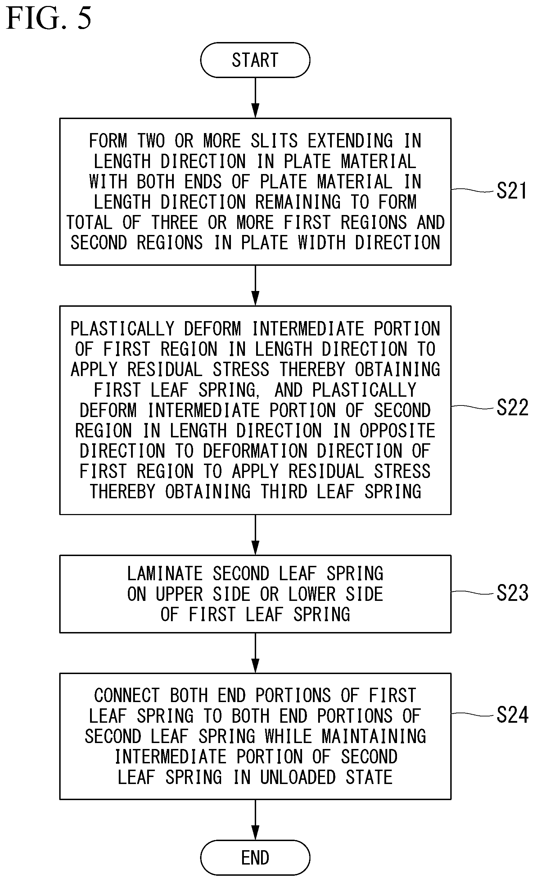

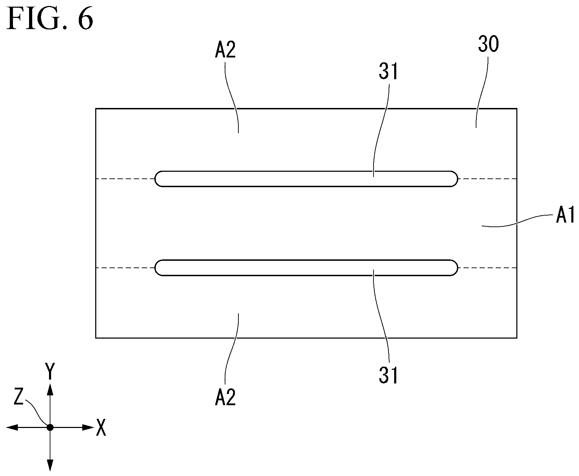

A method for manufacturing the pressure spring 2 according to the second embodiment will be described with reference to FIGS. 5 and 6. The method for manufacturing the pressure spring 2 of the present modification example includes a slit formation step, a deformation step, and a connecting step.

First, in the slit formation step, as shown in FIG. 6, two or more slits 31 extending in the length direction X are formed in the plate material 30, which is a flat plate material, with both ends of the plate material 30 remaining to form a total of three or more first region A1 and second region A2 (step S21). The first region A1 and the second region A2 are regions dividing the plate material 30 in the plate width direction Y with the slit 31 as a boundary. The first region A1 is a region to be the first leaf spring 11A, and the second region A2 is a region to be the third leaf spring 13. In the above description, the slit 31 extending in the length direction X is formed in the plate material 30 with both ends of the plate material 30 remaining, but the present invention is not limited thereto. The slit 31 extending in the length direction X may be formed in the plate material 30 with at least one end of the plate material 30 remaining.

Next, in the deformation step, the first region A1 is plastically deformed such that the outer surface 23a side of the portion that is to form the intermediate portion 23 of the first leaf spring 11A protrudes, and the second region A2 is plastically deformed to a side opposite to the portion that is to form the intermediate portion 23 of the first leaf spring 11A such that the outer surface 28a side of the portion that is to form the intermediate portion 28 of the third leaf spring 13 protrudes (step S22). Accordingly, the residual stress in the direction of pulling in the direction along the outer surface 23a of the first leaf spring 11A as viewed in the plate width direction Y is applied to the outer surface 23a side of the intermediate portion 23 of the first leaf spring 11A, and the residual stress in the direction of compressing in the direction along the inner surface 23b of the first leaf spring 11A as viewed in the plate width direction Y is applied to the inner surface 23b side of the intermediate portion 23 of the first leaf spring 11A. In addition, the residual stress in the direction of pulling in the direction along the outer surface 28a of the third leaf spring 13 as viewed in the plate width direction Y is applied to the outer surface 28a side of the intermediate portion 28 of the third leaf spring 13, and the residual stress in the direction of compressing in the direction along the inner surface 28b of the third leaf spring 13 as viewed in the plate width direction Y is applied to the inner surface 28b side of the intermediate portion 28 of the third leaf spring 13. In this case, in the flat plate material, portions that are to form the first fixed portions 21 and the flat portions 27 are supported to maintain a shape extending straight in the length direction X. Therefore, the portions that are to form the first fixed portions 21 and the flat portions 27 move to be contracted in the length direction X in accordance with the plastic deformation of the portion that is to form the intermediate portion 23 and the portion that is to form the intermediate portion 28 in a convex shape.

As a result, the first leaf spring 11A and the third leaf spring 13 including the intermediate portions 23 and 28 which are curved and to which the residual stress as described above is applied are obtained from one plate material 30.

Next, in the connecting step, the second leaf spring 12 is laminated on one side (upper side) or the other side (lower side) of the first leaf spring 11A in the plate thickness direction Z (step S23). Then, both end portions of the first leaf spring 11A in the length direction X are connected to both end portions of the second leaf spring 12 in the length direction X while maintaining the intermediate portion 24 of the second leaf spring 12 in an unloaded state in the length direction X (step S24). That is, in the connecting step, both end portions of the first leaf spring 11A in the length direction X are laminated and connected to both end portions of the second leaf spring 12 in the plate thickness direction Z while maintaining the intermediate portion 24 of the second leaf spring 12 in an unloaded state in the length direction X. Therefore, the shapes of the first leaf spring 11A and the third leaf spring 13 including the intermediate portions 23 and 28 which are curved and to which the residual stress as described above is applied and the shape of the second leaf spring 12 extending straight over the entire length in the length direction X are the same and do not change before and after the first fixed portions 21 of the first leaf spring 11A and the second fixed portions 22 of the second leaf spring 12 are connected to each other.

The method for manufacturing the pressure spring 2 includes the deformation step and the connecting step. Therefore, it is possible to reliably obtain the pressure spring 2 in which the residual stress in the direction of pulling in the first specific direction is applied to the outer surface 23a side of the intermediate portion 23 of the first leaf spring 11A, the residual stress in the direction of compressing in the second specific direction is applied to the inner surface 23b side of the intermediate portion 23 of the first leaf spring 11A, and the intermediate portion 24 of the second leaf spring 12 is in an unloaded state in the length direction X.

### (Third Embodiment)

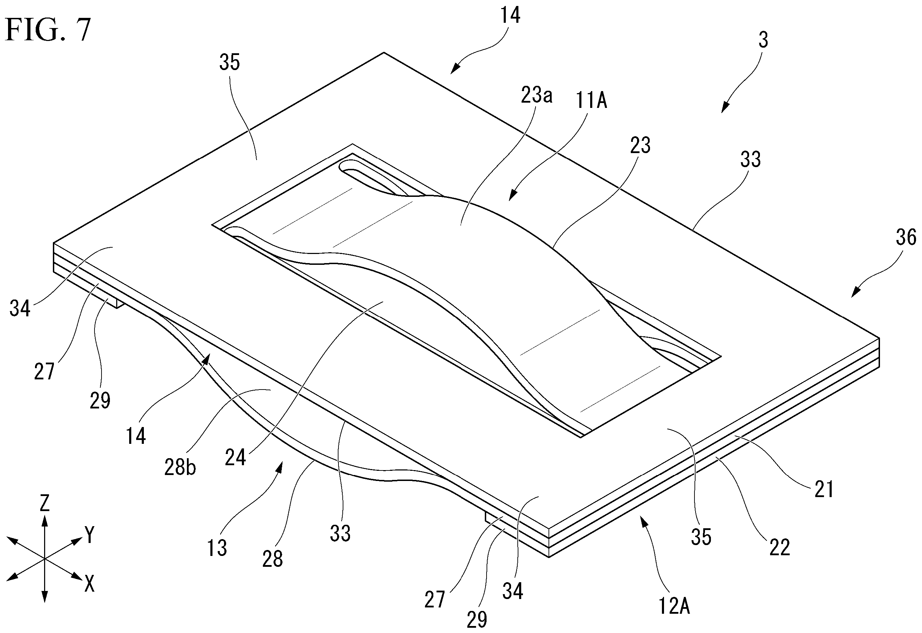

Next, a pressure spring 3 according to a third embodiment of the present invention will be described with reference to FIG. 7.

In the third embodiment, the same portions as the components in the second embodiment will be designated by the same reference signs, and a description thereof will be omitted, and only different points will be described.

As shown in FIG. 7, the pressure spring 3 of the present embodiment further includes a fourth leaf spring 14. The fourth leaf spring 14 extends straight in the length direction X over the entire length in the length direction X as viewed in the plate width direction Y. Two fourth leaf springs 14 are provided to face the two third leaf springs 13, respectively. An intermediate portion 33 of the fourth leaf spring 14 in the length direction X faces the intermediate portion 28 of the third leaf spring 13 in a state of being spaced apart from the intermediate portion 28 of the third leaf spring 13 in the plate thickness direction Z. The intermediate portion 33 of the fourth leaf spring 14 is in an unloaded state in the length direction X. Both end portions (the flat portions 27) of the third leaf spring 13 in the length direction X are connected to both end portions 34 of the fourth leaf spring 14 in the length direction X.

Both end portions 34 of one of the two fourth leaf springs 14 in the length direction X are connected to both end portions 34 of the other of the two fourth leaf springs 14 in the length direction X through connection portions 35 in the plate width direction Y. The two fourth leaf springs 14 and the two connection portions 35 are provided in an integrated plate material 36. In other words, the rectangular frame-shaped plate material 36 is formed by the two fourth leaf springs 14 and the two connection portions 35. In addition, in the present embodiment, both end portions of a second leaf spring 12A in the length direction X have protruding portions 29 that extend outside in the plate width direction Y to face the flat portions 27 of the third leaf spring 13. The second leaf spring 12A has an H-shape.

As described above, the pressure spring 3 according to the present embodiment further includes the fourth leaf spring 14 including the intermediate portion 33 in the length direction X that faces the intermediate portion 28 of the third leaf spring 13 in a state of being spaced apart from the intermediate portion 28 of the third leaf spring 13 in the plate thickness direction Z, and is in an unloaded state in the length direction X. Both end portions of at least one third leaf spring 13 in the length direction X are connected to both end portions 34 of the fourth leaf spring 14 in the length direction X.

According to the pressure spring 3 of the present embodiment, since the fourth leaf spring 14 is provided, it is possible to increase the spring constant of the pressure spring 3 that appears and to stabilize the posture of the pressure spring 3 between the pair of pressed objects.

In manufacturing the pressure spring 3 according to the present embodiment, in the step S23 of the manufacturing method according to the second embodiment shown in FIG. 5, the second leaf spring 12A is laminated on one side (upper side or lower side) of the first leaf spring 11A in the plate thickness direction Z, and the fourth leaf spring 14 is laminated on the other side (lower side or upper side) of the third leaf spring 13 in the plate thickness direction Z. In addition, in the connecting step, both end portions of the third leaf spring 13 and both end portions of the fourth leaf spring 14 are connected to each other in addition to the connecting of both end portions of the first leaf spring 11 and both end portions of the second leaf spring 12A to each other.

### (Fourth Embodiment)

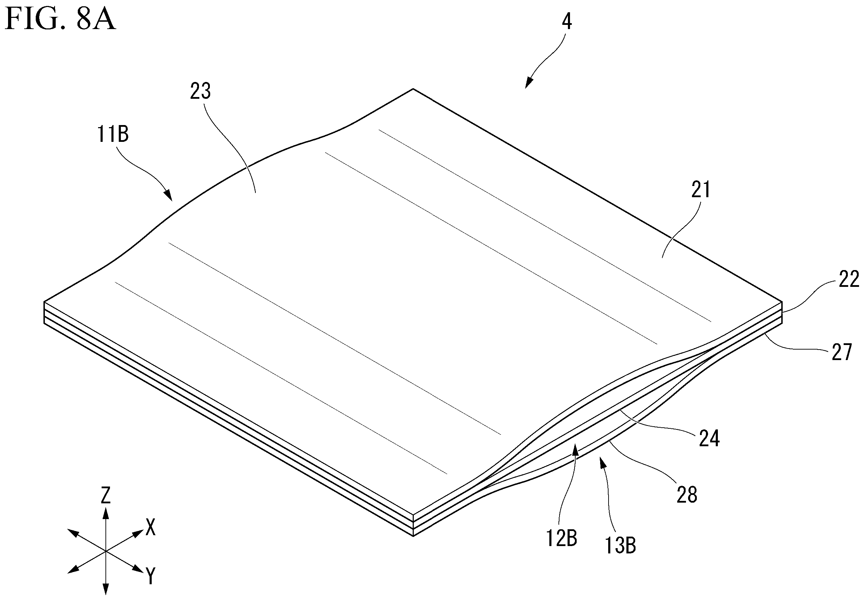

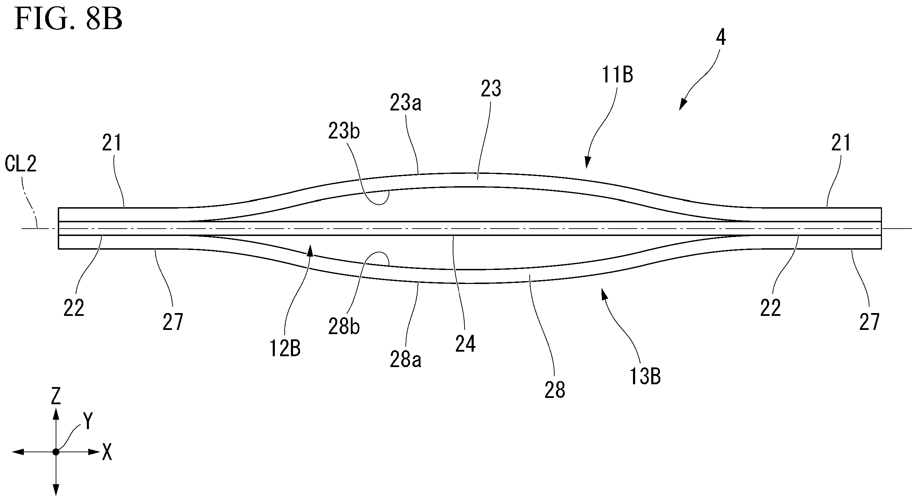

Next, a pressure spring 4 according to the fourth embodiment of the present invention will be described with reference to FIGS. 8A and 8B.

In the fourth embodiment, the same portions as the components in the first to third embodiments will be designated by the same reference signs, and a description thereof will be omitted, and only different points will be described.

As shown in FIGS. 8A and 8B, in the present embodiment, sizes of a first leaf spring 11B, a second leaf spring 12B, and a third leaf spring 13B in the plate width direction Y are the same as each other. The first leaf spring 11B, the second leaf spring 12B, and the third leaf spring 13B are separate bodies and are arranged at the same position in the plate width direction Y. The second fixed portion 22 is interposed between the first fixed portion 21 and the flat portion 27 in the plate thickness direction Z. The intermediate portions 24 and 23 of the second leaf spring 12B and the first leaf spring 11B face each other in the plate thickness direction Z, and the intermediate portions 24 and 28 of the second leaf spring 12B and the third leaf spring 13B face each other in the plate thickness direction Z.

Note that the sizes of the first leaf spring 11, the second leaf spring 12 and the third leaf spring 13 in the plate width direction Y may be different from each other. For example, the sizes of the first leaf spring 11 and the third leaf spring 13 in the plate width direction Y may be the same as each other and be different from the size of the second leaf spring 12 in the plate width direction Y.

As shown in FIG. 8B, the first leaf spring 11B and the third leaf spring 13B have a shape that is symmetrical with respect to a center line CL2 (that is, a straight line that passes through the center of the second leaf spring 12B in the plate thickness direction Z and extends in the length direction X, which is shown in FIG. 8B) of the second leaf spring 12B in the plate thickness direction Z. The shape being symmetrical is not limited to a perfectly symmetrical shape, and may include a generally used shape error or dimensional error in the industry. Both end portions (the flat portions 27) of the third leaf spring 13B in the length direction X are connected to both end portions (the second fixed portions 22) of the second leaf spring 12B in the length direction X. The first leaf spring 11B, the second leaf spring 12B, and the third leaf spring 13B are located at substantially the same position in the plate width direction Y and overlap each other. In the pressure spring 4 of the present embodiment, the spring constant can be set to be higher than that of the pressure spring 1 of the first embodiment shown in FIG. 1.

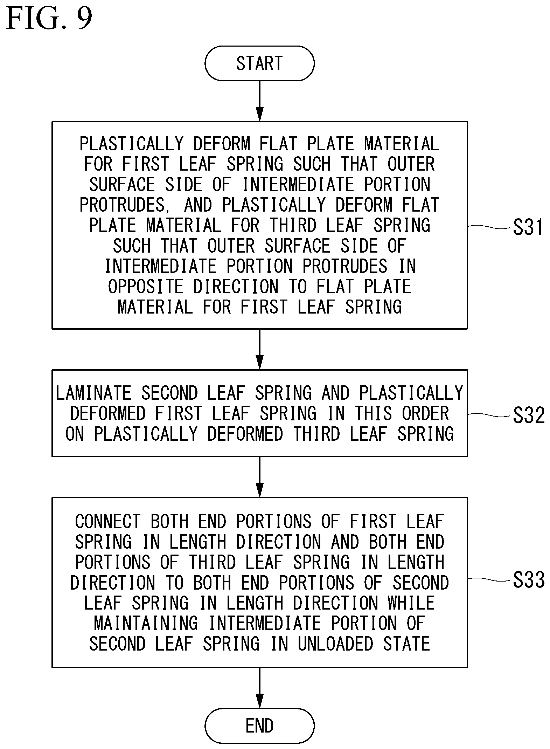

A method for manufacturing the pressure spring 4 according to the fourth embodiment will be described with reference to FIG. 9. The method for manufacturing the pressure spring 4 of the present embodiment includes a deformation step and a connecting step.

In the deformation step, a flat plate material for the first leaf spring 11B is plastically deformed such that the outer surface 23a side of the portion that is to form the intermediate portion 23 protrudes, and a flat plate material for the third leaf spring 13B is plastically deformed such that the outer surface 28a side of the portion that is to form the intermediate portion 28 protrudes (step S31). Accordingly, the residual stress in the direction of pulling in the direction along the outer surface 23a of the first leaf spring 11B as viewed in the plate width direction Y is applied to the outer surface 23a side of the intermediate portion 23 of the first leaf spring 11B, and the residual stress in the direction of compressing in the direction along the inner surface 23b of the first leaf spring 11B as viewed in the plate width direction Y is applied to the inner surface 23b side of the intermediate portion 23 of the first leaf spring 11B. The residual stress in the direction of pulling in the direction along the outer surface 28a of the third leaf spring 13B as viewed in the plate width direction Y is applied to the outer surface 28a side of the intermediate portion 28 of the third leaf spring 13B, and the residual stress in the direction of compressing in the direction along the inner surface 28b of the third leaf spring 13B as viewed in the plate width direction Y is applied to the inner surface 28b side of the intermediate portion 28 of the third leaf spring 13B.

Next, in the connecting step, first, the second leaf spring 12B and the plastically-deformed first leaf spring 11B are laminated in this order on the plastically-deformed third leaf spring 13B in the plate thickness direction Z (step S32). Then, both end portions of the first leaf spring 11B in the length direction X and both end portions of the third leaf spring 13B in the length direction X are connected to both end portions of the second leaf spring 12B in the length direction X while maintaining the intermediate portion 24 of the second leaf spring 12B in an unloaded state in the length direction X (step S33). That is, in the connecting step, the first leaf spring 11B, the second leaf spring 12B, and the third leaf spring 13B that protrudes in an opposite direction to the first leaf spring 11B are laminated in the plate thickness direction Z while maintaining the intermediate portion 24 of the second leaf spring 12B in an unloaded state in the length direction X, and both end portions of the first leaf spring 11B in the length direction X and both end portions of the third leaf spring 13B in the length direction X are connected to both end portions of the second leaf spring 12B in the length direction X. Therefore, the shapes of the first leaf spring 11B and the third leaf spring 13B including the intermediate portions 23 and 28 which are curved and to which the residual stress as described above is applied and the shape of the second leaf spring 12B extending straight over the entire length in the length direction X are the same and do not change before and after the first fixed portions 21 of the first leaf spring 11B and the second fixed portions 22 of the second leaf spring 12B are connected to each other.

### (Fifth Embodiment)

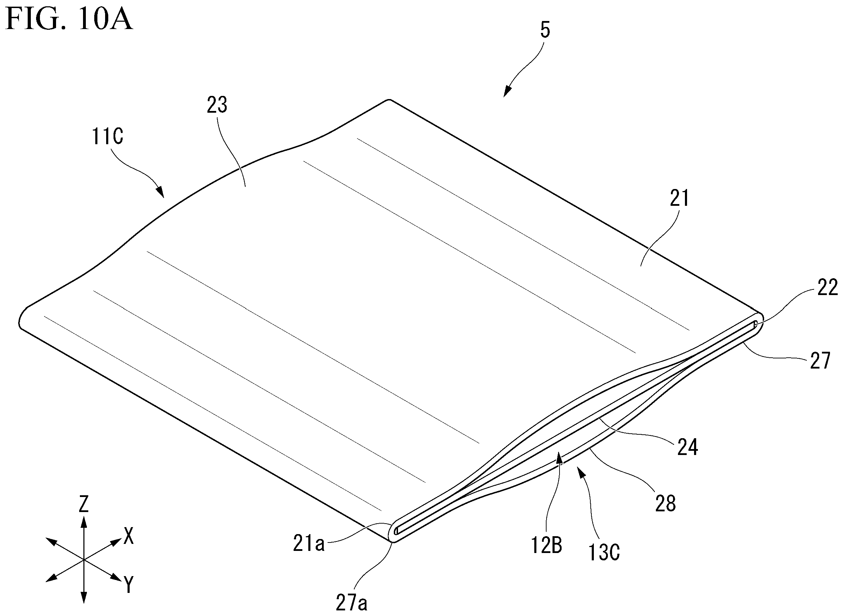

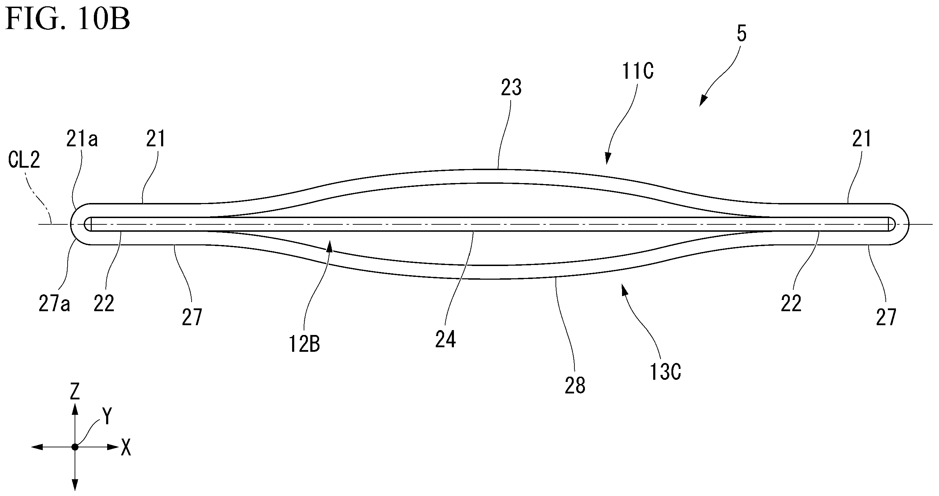

Next, a pressure spring 5 according to the fifth embodiment of the present invention will be described with reference to FIGS. 10A and 10B.

In the fifth embodiment, the same portions as the components in the first to fourth embodiments will be designated by the same reference signs, and a description thereof will be omitted, and only different points will be described.

As shown in FIGS. 10A and 10B, in the present embodiment, a first leaf spring 11C and a third leaf spring 13C have a continuous outer periphery when viewed in the plate width direction Y. Inner peripheral surfaces of both end portions of the first leaf spring 11C in the length direction X and inner peripheral surfaces of both end portions of the third leaf spring 13C in the length direction X are connected to both end portions of the second leaf spring 12B in the length direction X.

The first leaf spring 11C and the third leaf spring 13C are continuously formed such that both end portions of the first leaf spring 11C and the third leaf spring 13C in the length direction X are flattened and the intermediate portions 23 and 28 of the first leaf spring 11C and the third leaf spring 13C in the length direction X are curved to have a curved shape protruding in a direction of being away from each other. Outermost ends 21a of the flat portions (the first fixed portions 21) positioned at both ends of the first leaf spring 11C in the length direction X and outermost ends 27a of the flat portions 27 positioned at both ends of the third leaf spring 13C in the length direction X are continuous in the plate thickness direction Z. In addition, the first leaf spring 11C and the third leaf spring 13C have a shape that is symmetrical with respect to the center line CL2 of the second leaf spring 12B in the plate thickness direction Z. The shape being symmetrical is not limited to a perfectly symmetrical shape, and may include a generally used shape error or dimensional error in the industry.

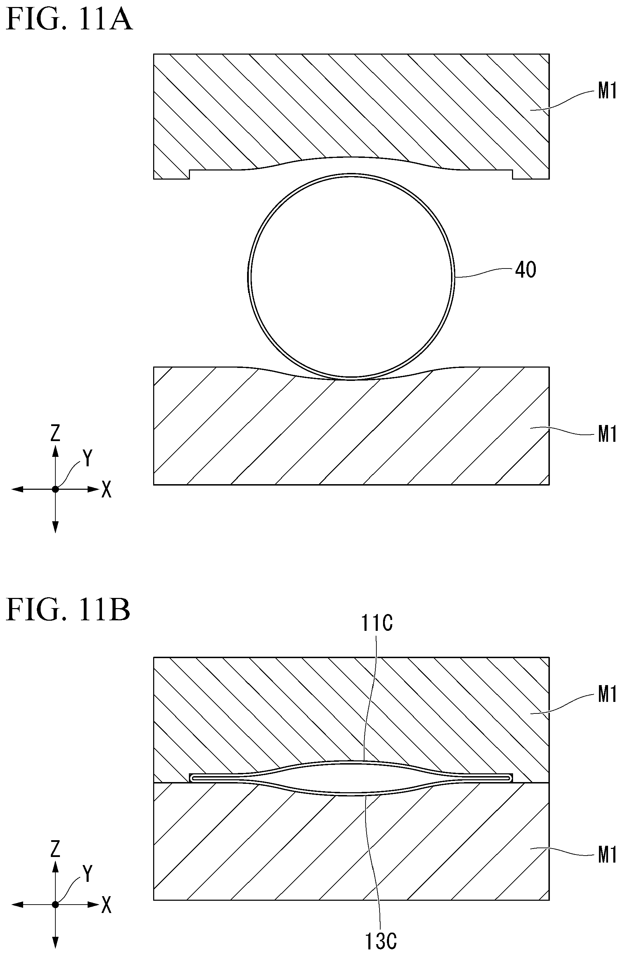

A method for manufacturing the pressure spring 5 according to the fifth embodiment will be described with reference to FIGS. 11A to 11D. The method for manufacturing the pressure spring 5 according to the present embodiment includes a forming step, a fitting step, and a connecting step.

In the forming step, as shown in FIGS. 11A and 11B, a tubular material 40 is crushed using dies M1 such that both end portions of the tubular material 40 in a predetermined one direction (corresponding to the length direction X) along a radial direction of the tubular material 40 are flattened and center portions of the tubular material 40 in the one direction are spaced apart from each other to have a protruding curved shape, thereby forming the continuous first and third leaf springs 11C and 13C. At this time, the shapes of the first leaf spring 11C and the third leaf spring 13C are symmetrical with respect to the one direction.

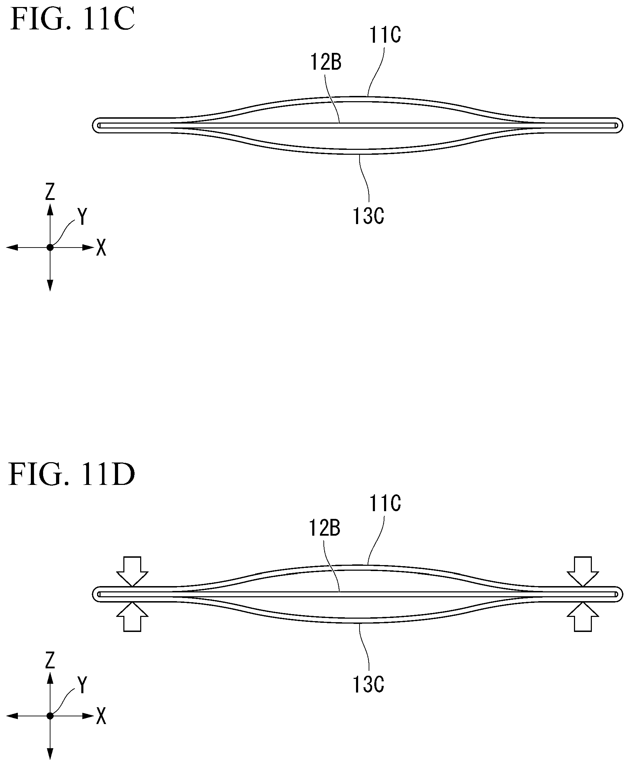

In the fitting step, as shown in FIG. 11C, the second leaf spring 12B is fitted into a space between the first leaf spring 11C and the third leaf spring 13C.

In the connecting step, as shown in FIG. 11D, both end portions of the second leaf spring 12B in the length direction X are connected to the flat portions of the first leaf spring 11C and the third leaf spring 13C.

In the present embodiment, since the first leaf spring 11C and the third leaf spring 13C are continuous, as compared with a configuration in which the first leaf spring, the second leaf spring, and the third leaf spring are laminated in three layers and connected to each other, the first leaf spring 11C and the third leaf spring 13C do not need to be positioned with respect to each other, and the pressure spring 5 can be easily manufactured.

### (Sixth Embodiment)

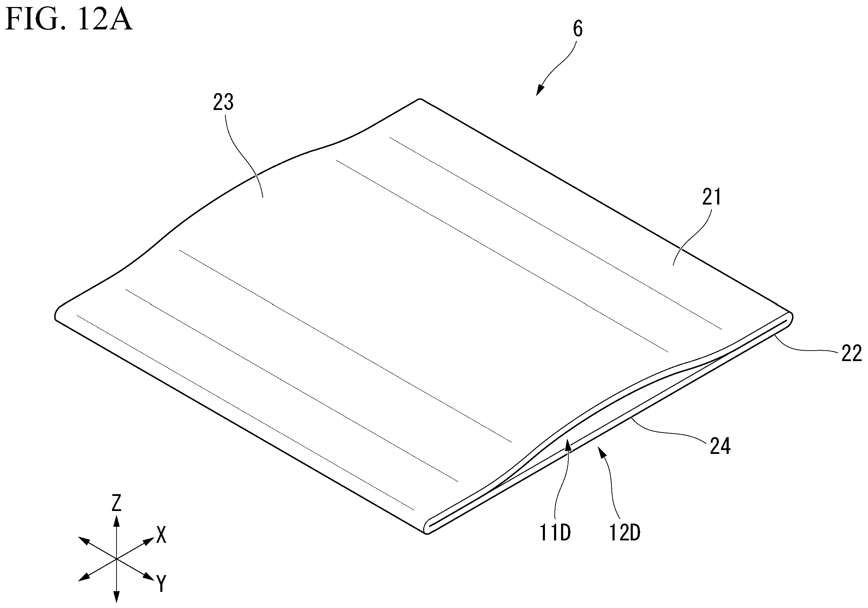

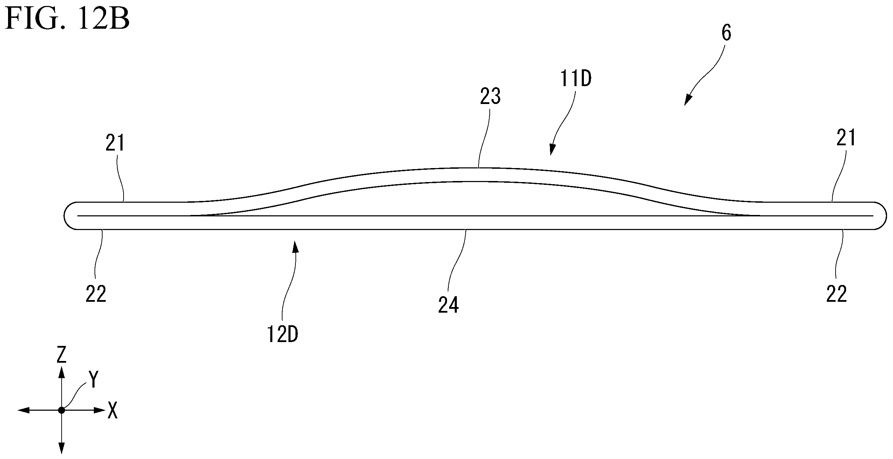

Next, a pressure spring 6 according to the sixth embodiment of the present invention will be described with reference to FIGS. 12A and 12B.

In the sixth embodiment, the same portions as the components in the first to fifth embodiments will be designated by the same reference signs, and a description thereof will be omitted, and only different points will be described.

As shown in FIGS. 12A and 12B, in the present embodiment, a first leaf spring 11D and a second leaf spring 12D are continuous when viewed in the plate width direction Y. That is, the first leaf spring 11D and the second leaf spring 12D are formed of an integrated plate material.

The second leaf spring 12D has a planar shape. That is, the second leaf spring 12D extends straight in the length direction X over the entire length in the length direction X as viewed in the plate width direction Y. The first leaf spring 11D has a shape in which the intermediate portion 23 in the length direction X is curved to have a protruding curved shape and both end portions in the length direction X are flat. The flat portions of the first leaf spring 11D that are positioned at both ends in the length direction X and both end portions of the second leaf spring 12D that has a planar shape in the length direction X are continuous in the plate thickness direction Z. In addition, it is preferable that the inner peripheral surfaces of the flat portions of the first leaf spring 11D positioned at both ends in the length direction X and the inner peripheral surfaces of both end portions of the second leaf spring 12D in the length direction X are connected to each other.

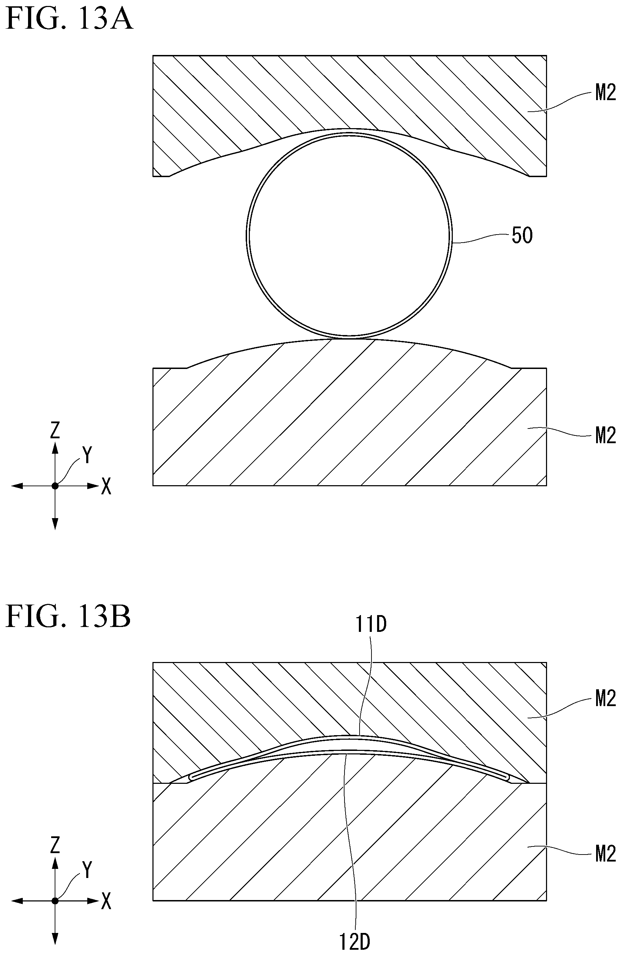

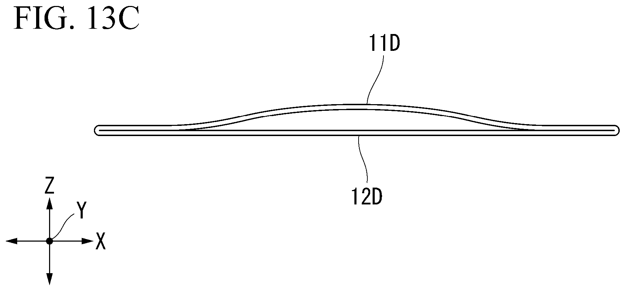

A method for manufacturing the pressure spring 6 according to the present embodiment will be described with reference to FIGS. 13A to 13C. The method for manufacturing the pressure spring 6 according to the present embodiment includes a forming step.

In the forming step, a tubular material 50 is crushed using dies M2 such that, as viewed in an axial direction (corresponding to the plate width direction Y) of the tubular material 50, one side of the tubular material 50 in a predetermined one direction (corresponding to the plate thickness direction Z) along a radial direction of the tubular material 50 is formed in a planar shape, and the other side of the tubular material 50 in the one direction is formed so that a center portion in an orthogonal direction (corresponding to the length direction X) orthogonal to the one direction has a curved shape protruding to the other side in the one direction and both end portions in the orthogonal direction are flattened. As a result, the first leaf spring 11D and the second leaf spring 12D are integrally formed such that the flat portion of the first leaf spring 11D and the flat surface portion of the second leaf spring 12D are continuous.

In the forming step, in order to form the second leaf spring 12D in a planar shape, a portion of the tubular material 50 to be the second leaf spring 12D may be deformed by the dies M2 to protrude in an opposite direction to a protrusion of the cylindrical tubular material 50, in consideration of spring back. Accordingly, after the dies M2 is removed, the pressure spring 6 having a desired shape can be obtained.

In addition, after the forming step, both end portions of the first leaf spring 11D in the orthogonal direction and both end portions of the second leaf spring 12D in the orthogonal direction may be connected to each other.

In the present embodiment, since the first leaf spring 11D and the second leaf spring 12D are continuous, as compared with a configuration in which the first leaf spring and the second leaf spring are laminated in two layers and connected to each other, the first leaf spring 11D and the second leaf spring 12D do not need to be positioned with respect to each other, and the pressure spring 6 can be easily manufactured.

### (Seventh Embodiment)

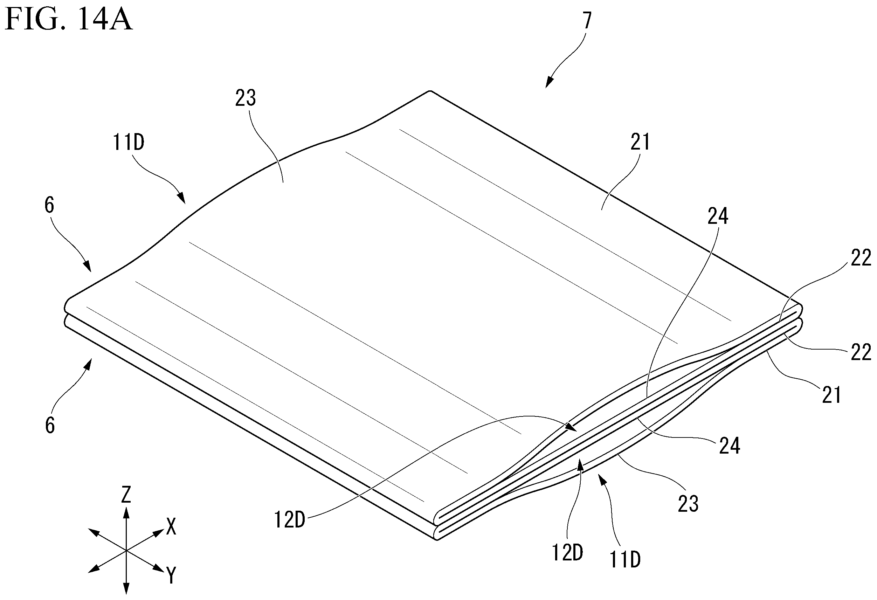

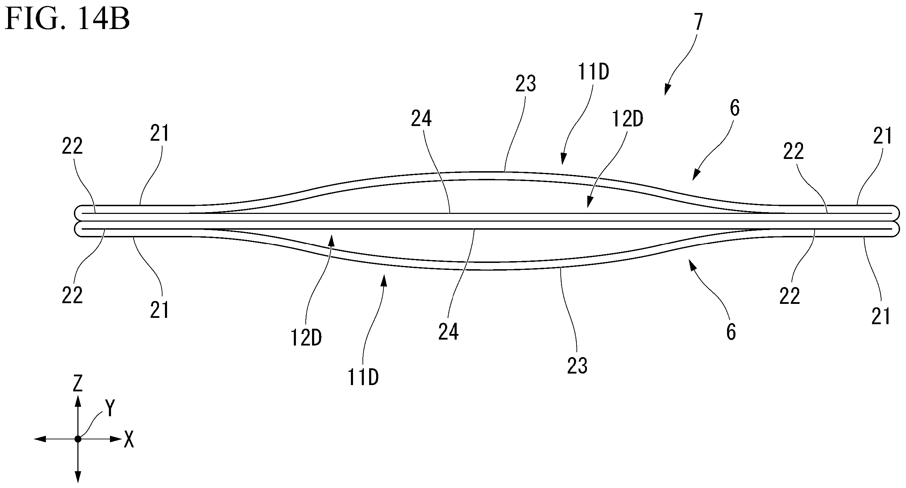

Next, a pressure spring structure 7 according to the seventh embodiment of the present invention will be described with reference to FIGS. 14A and 14B.

In the seventh embodiment, the same portions as the components in the sixth embodiment will be designated by the same reference signs, and a description thereof will be omitted, and only different points will be described.

As shown in FIGS. 14A and 14B, in the pressure spring structure 7 of the present embodiment, the two pressure springs 6 according to the sixth embodiment are provided in a state of being inverted relative to each other in the plate thickness direction Z. The second leaf springs 12D of the two pressure springs 6 are laminated in the plate thickness direction Z. The two second leaf springs 12D are connected to each other at both end portions in the length direction X. Alternatively, all of the two first leaf springs 11D and the two second leaf springs 12D may be connected in the plate thickness direction Z, at both end portions in the length direction X.

In the present embodiment, since the pressure spring structure 7 is formed by combining the pressure springs 6 which are one component, the pressure spring structure 7 can be efficiently manufactured at a low cost. In addition, in the pressure spring structure 7, by connecting the second leaf springs 12D of the two pressure springs 6 at both end portions in the length direction X, it is possible to increase the spring constant of the pressure spring that appears, as compared with a case where the second leaf springs 12D are not connected, and it is possible to stabilize the posture of the pressure spring structure 7 between the pair of pressed objects. In the pressure spring structure 7, the second leaf springs 12D of the two pressure springs 6 may be joined by bonding the second leaf springs 12D to each other in a planar manner. In addition, in the present embodiment, the second fixed portion (fixed portion) 22 may be provided in a portion other than both end portions of the second leaf spring 12D in the length direction X.

### (Modification Example)

A pressure spring structure may be formed by providing the two pressure springs 1 according to the first embodiment so that the second leaf springs 12 face each other. In this case, by connecting the second leaf springs 12 of the two pressure springs 1 at both end portions in the length direction X, it is possible to increase the spring constant of the pressure spring that appears, as compared with a case where the second leaf springs 12 are not connected, and it is possible to stabilize the posture of the pressure spring structure between the pair of pressed objects. The second leaf springs 12 of the two pressure springs 1 may be joined by bonding the second leaf springs 12 to each other in a planar manner.

The technical scope of the present invention is not limited to the above embodiment, and various modifications can be made without departing from the spirit of the present invention.

For example, the residual stress in the direction of compressing in the direction along the inner surfaces 23b and 28b as viewed in the plate width direction Y may not be applied to the inner surfaces 23b and 28b side of the intermediate portions 23 and 28 of the first leaf spring 11 and the third leaf spring 13.

In the above-described embodiment, the pressure springs 1, 2, 3, 4, 5, and 6 and the pressure spring structure 7 show a configuration in which the size in the length direction X is longer than the size in the plate width direction Y. However, the pressure springs 1, 2, 3, 4, 5, and 6 and the pressure spring structure 7 may be configured such that the size in the plate width direction Y is longer than the size in the length direction X.

In the above-described embodiments, a configuration has been described in which the pressed object is provided with the individual pressure springs 1, 2, 3, 4, 5, and 6 or the pressure spring structure 7. However, the plurality of pressure springs 1, 2, 3, 4, 5, and 6 or the plurality of pressure spring structures 7 may be arranged in the length direction X or the plate width direction Y. In addition, the plurality of pressure springs 1, 2, 3, 4, 5, and 6 or the plurality of pressure spring structures 7 may be arranged so that the length direction X and the plate width direction Y are shifted by 90 degrees.

In the above description, the method for manufacturing one pressure spring has been described with reference to FIGS. 2, 5, 6, 9, 11A to 11D, and 13A to 13D. However, for the pressure springs according to the first embodiment, the second embodiment, the third embodiment, and the fourth embodiment, the plurality of pressure springs can be continuously and efficiently manufactured. Hereinafter, a method for manufacturing a plurality of pressure springs arranged consecutively will be described as eighth to seventeenth embodiments.

### (Eighth Embodiment)

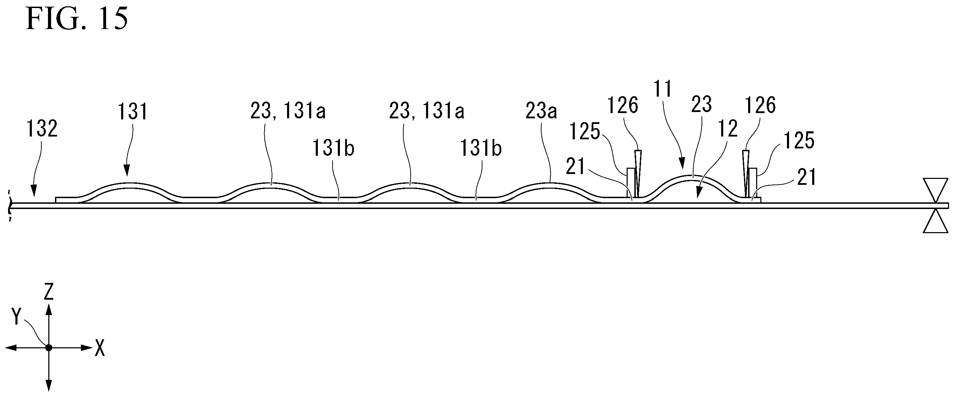

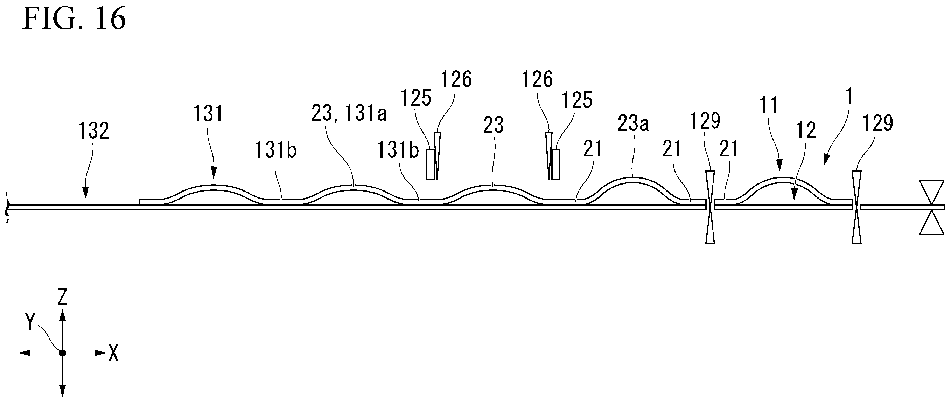

A method for manufacturing the pressure spring 1 according to an eighth embodiment of the present invention will be described with reference to FIGS. 15 and 16. In the manufacturing method of the present embodiment, for the pressure spring 1 of the first embodiment shown in FIGS. 1A and 1B, a plurality of pressure springs 1 arranged consecutively are manufactured. In the method for manufacturing the pressure spring 1 of the present embodiment, a connecting step and a cutting step are performed in this order.

As shown in FIG. 15, in the connecting step, the first fixed portions 21 of the first leaf spring 11 are connected to a long second leaf spring material 132 in which the plurality of second leaf springs 12 are arranged integrally and consecutively in the length direction X. The second leaf spring material 132 is wound in a roll shape, and, during the connecting step, the second leaf spring material 132 is fed out by a constant length sufficient to cut out the plurality of second leaf springs 12 and is fixed at its distal end in a state of being straightened in the length direction X.

In the shown example, during the connecting step, the first fixed portions 21 are connected to the second leaf spring material 132 by a connecting machine 126 in a state where the first leaf spring 11 is elastically deformed such that the size of the first leaf spring 11 in the length direction X is reduced, and a stress in the direction of pulling in the direction along the outer surface 23a of the first leaf spring 11 (hereinafter, referred to as a first specific direction) as viewed in the plate width direction Y is applied to the outer surface 23a side of the intermediate portion 23 of the first leaf spring 11.

At this time, two holding jigs 125 provided spaced away from each other in the length direction X are brought into contact with the outer surface of the first leaf spring 11 facing a side opposite to the second leaf spring 12 in the plate thickness direction Z, and the relative movement between the holding jigs 125 and the first leaf spring 11 is restricted by, for example, the frictional force or the like. In this state, the two holding jigs 125 are moved closer relatively to each other in the length direction X, and the first leaf spring 11 is elastically deformed as described above. In the shown example, the frictional force generated between the holding jig 125 and the first leaf spring 11 is greater than the frictional force generated between the second leaf spring material 132 and the first leaf spring 11.

In addition, before the connecting step, the residual stress in the direction of pulling in the first specific direction may be applied to the outer surface 23a side of the intermediate portion 23 of the first leaf spring 11. In this case, during the connecting step, the first leaf spring 11 may be elastically deformed as described above, or may not be elastically deformed. During the connecting step, the second leaf spring material 132 may be pulled in the length direction X.

In the shown example, in the connecting step, the first fixed portions 21 of the first leaf spring 11, which is included in a long first leaf spring material 131 in which the plurality of first leaf springs 11 are arranged integrally and consecutively in the length direction X, are connected to the second leaf spring material 132. Alternatively, in the connecting step, the individual first leaf springs 11 may be used without adopting the long first leaf spring material 131.

The first leaf spring material 131 is formed in a wave shape that extends in the length direction X while being curved in the plate thickness direction Z. The first leaf spring material 131 is configured such that a curved portion 131a that has a curve shape protruding in a direction of being away from the second leaf spring material 132 in the plate thickness direction Z as viewed in the plate width direction Y and that serves as the intermediate portion 23 of the pressure spring 1 and a flat portion 131b that extends straight in the length direction X and that serves as the first fixed portion 21 of the pressure spring 1 are alternately arranged in the length direction X.

During the connecting step, the holding jigs 125 are respectively brought into contact with the two flat portions 131b located on both sides in the first leaf spring material 131 with the curved portion 131a interposed therebetween in the length direction X in a state where the relative movement is restricted, the two holding jigs 125 are moved closer to each other in the length direction X, and the curved portion 131a is elastically deformed such that the radius of curvature when viewed in the plate width direction Y is reduced.

Next, in the cutting step, the second leaf spring material 132 is cut together with the first leaf spring material 131 to obtain the pressure spring 1. At this time, as shown in FIG. 16, the holding jig 125 and the connecting machine 126 are moved away from the first leaf spring material 131 in the plate thickness direction Z. In this state, the second leaf spring material 132 is fed out such that a portion of the the second leaf spring material 132 connected during the connecting step described above is moved away from the holding jig 125 and the connecting machine 126 in the length direction X to a position at which a cutting machine 129 is provided, and is cut by the cutting machine 129.

Here, portions of the first leaf spring material 131 and the second leaf spring material 132, which are adjacent to a portion to be integrally cut in the cutting step on a rear side in a feeding direction along the length direction X, are connected to each other in the plate thickness direction Z. Accordingly, the relative positional shift between the first leaf spring material 131 and the second leaf spring material 132 during the cutting can be prevented.

FIG. 16 shows an example in which the first leaf spring material 131 and the second leaf spring material 132 are connected at the portions on both adjacent sides of the portion to be integrally cut in the cutting step in the length direction X. However, the first leaf spring material 131 and the second leaf spring material 132 may not be connected at a portion interposed between the first fixed portions 21, among the portions on both adjacent sides of the portion to be integrally cut in the cutting step in the length direction X.

### (Ninth Embodiment)

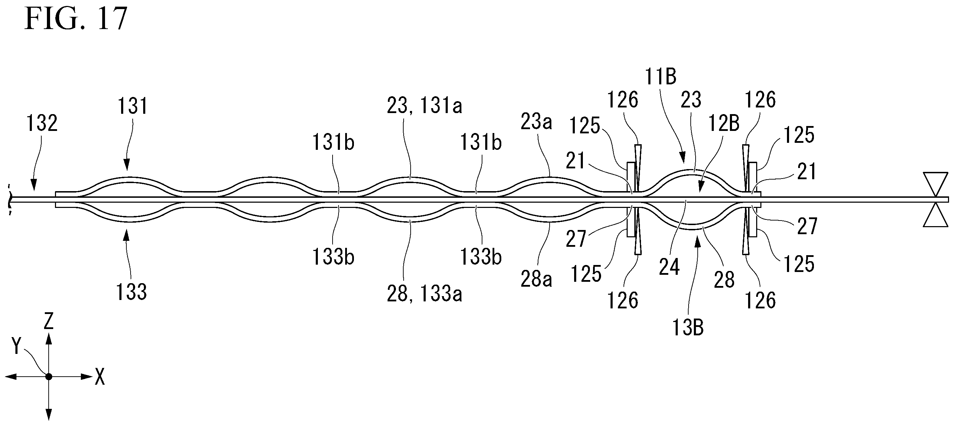

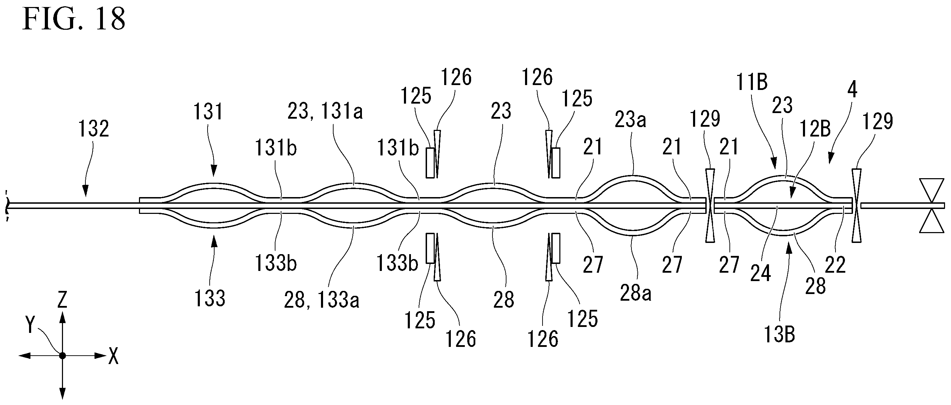

A method for manufacturing the pressure spring according to a ninth embodiment of the present invention will be described with reference to FIGS. 17 and 18. In the manufacturing method of the present embodiment, for the pressure spring 4 of the fourth embodiment shown in FIGS. 8A and 8B, a plurality of pressure springs 4 arranged consecutively are manufactured. In the method for manufacturing the pressure spring 4 of the present embodiment, a connecting step and a cutting step are performed in this order.

In the connecting step, the first fixed portions 21 of the first leaf spring 11B and the flat portions 27 of the third leaf spring 13B are connected to a long second leaf spring material 132 in which the plurality of second leaf springs 12B are arranged integrally and consecutively in the length direction X.

The second leaf spring material 132 is wound in a roll shape, and, during the connecting step, the second leaf spring material 132 is fed out by a constant length sufficient to cut out the plurality of second leaf springs 12B and is fixed at its distal end in a state of being straightened in the length direction X.

In the shown example, during the connecting step, the first fixed portions 21 and the flat portions 27 are connected to the second leaf spring material 132 by the connecting machine 126 in a state where the first leaf spring 11B and the third leaf spring 13B are elastically deformed such that the size of each of the first leaf spring 11B and the third leaf spring 13B in the length direction X is reduced, and a stress in the direction of pulling in the direction along the outer surfaces 23a and 28a of the first leaf spring 11B and the third leaf spring 13B (hereinafter, referred to as the first specific direction) as viewed in the plate width direction Y is applied to the outer surfaces 23a and 28a side of the intermediate portions 23 and 28 of the first leaf spring 11B and the third leaf spring 13B.

At this time, for each of the first leaf spring 11B and the third leaf spring 13B, the two holding jigs 125 provided spaced away from each other in the length direction X are brought into contact with the outer surface facing a side opposite to the second leaf spring 12B in the plate thickness direction Z, and the relative movement between the holding jigs 125 and the first leaf spring 11B and the relative movement between the holding jigs 125 and the third leaf spring 13B are restricted by, for example, the frictional force or the like. In this state, the two holding jigs 125 are moved closer relatively to each other in the length direction X, and the first leaf spring 11B and the third leaf spring 13B are elastically deformed as described above. In the shown example, the frictional force generated between the holding jig 125 and the first leaf spring 11B and the frictional force generated between the holding jig 125 and the third leaf spring 13B are greater than the frictional force generated between the second leaf spring material 132 and the first leaf spring 11B and the frictional force generated between the second leaf spring material 132 and the third leaf spring 13B.

In addition, before the connecting step, the residual stress in the direction of pulling in the first specific direction may be applied to the outer surfaces 23a and 28a side of the intermediate portions 23 and 28 of the first leaf spring 11B and the third leaf spring 13B. In this case, during the connecting step, the first leaf spring 11B and the third leaf spring 13B may be elastically deformed as described above, or may not be elastically deformed. During the connecting step, the second leaf spring material 132 may be pulled in the length direction X.

In the shown example, in the connecting step, the first fixed portions 21 of the first leaf spring 11B, which is included in a long first leaf spring material 131 in which the plurality of first leaf springs 11B are arranged integrally and consecutively in the length direction X, are connected to the second leaf spring material 132, and the flat portions 27 of the third leaf spring 13B, which is included in a long third leaf spring material 133 in which the plurality of third leaf springs 13B are arranged integrally and consecutively in the length direction X, are connected to the second leaf spring material 132.

The first leaf spring material 131 and the third leaf spring material 133 are formed in a wave shape that extends in the length direction X while being curved in the plate thickness direction Z. The first leaf spring material 131 and the third leaf spring material 133 are configured such that curved portions 131a and 133a that have a curve shape protruding in a direction of being away from the second leaf spring material 132 in the plate thickness direction Z as viewed in the plate width direction Y and that serve as the intermediate portions 23 and 28 of the pressure spring 4 and flat portions 131b and 133b that extend straight in the length direction X and that serve as the first fixed portion 21 and the flat portion 27 of the pressure spring 4 are alternately arranged in the length direction X. The first leaf spring material 131 and the third leaf spring material 133 have a symmetrical shape with respect to the second leaf spring material 132 as viewed in the plate width direction Y.

During the connecting step, for each of the first leaf spring material 131 and the third leaf spring material 133, the holding jigs 125 are brought into contact with the two flat portions 131b and 133b located on both sides in the first leaf spring material 131 and the third leaf spring material 133 with the curved portions 131a and 133a interposed therebetween in the length direction X in a state where the relative movement is restricted, the two holding jigs 125 are moved closer to each other in the length direction X, and the curved portions 131a and 133a are elastically deformed such that the radius of curvature when viewed in the plate width direction Y is reduced.

Next, in the cutting step, the second leaf spring material 132 is cut together with the first leaf spring material 131 and the third leaf spring material 133 to obtain the pressure spring 4. At this time, as shown in FIG. 18, the holding jig 125 and the connecting machine 126 are moved away from the first leaf spring material 131 and the third leaf spring material 133 in the plate thickness direction Z. In this state, the second leaf spring material 132 is fed out such that a portion of the the second leaf spring material 132 connected during the connecting step described above is moved away from the holding jig 125 and the connecting machine 126 in the length direction X to a position at which the cutting machine 129 is provided, and is cut by the cutting machine 129.

Here, portions of the first leaf spring material 131, the second leaf spring material 132, and the third leaf spring material 133, which are adjacent to a portion to be integrally cut in the cutting step on a rear side in the feeding direction along the length direction X, are connected to each other in the plate thickness direction Z. Accordingly, the relative positional shift between the first leaf spring material 131, the second leaf spring material 132, and the third leaf spring material 133 during the cutting can be prevented.

As described above, the pressure spring 4 according to the present embodiment includes the first leaf spring 11B and the second leaf spring 12B. Therefore, when the pressure spring 4 is interposed between a pair of pressed objects in the plate thickness direction Z and a pushing load that is directed toward the second leaf spring 12B in the plate thickness direction Z is applied to the intermediate portion 23 of the first leaf spring 11B, a tensile force in the length direction X is applied to the second leaf spring 12B via the first fixed portions 21 of the first leaf spring 11B.

At this time, the length of the intermediate portion 24 of the second leaf spring 12B along the surface of the second leaf spring 12B as viewed in the plate width direction Y is shorter than the length of the intermediate portion 23 of the first leaf spring 11B along the surface of the first leaf spring 11B and the length of the intermediate portion 28 of the third leaf spring 13B along the surface of the third leaf spring 13B as viewed in the plate width direction Y. Therefore, regardless of a material or the like of the second leaf spring 12B, the second leaf spring 12B limits deformation of the first leaf spring 11B, and the spring constant of the pressure spring 4 that appears can be increased, so that a high pressing force can be output in a space-saving manner.

Since the stress in the direction of pulling in the first specific direction is applied to the outer surfaces 23a and 28a side of the intermediate portions 23 and 28 of the first leaf spring 11B and the third leaf spring 13B, a compressive stress in the first specific direction generated on the outer surfaces 23a and 28a side of the intermediate portions 23 and 28 of the first leaf spring 11B and the third leaf spring 13B when a pushing load that is directed toward the second leaf spring 12B in the plate thickness direction Z is applied to the outer surfaces 23a and 28a side of the intermediate portions 23 and 28 is relaxed, and even in a case where the pressure spring 4 is largely compressed and deformed in the plate thickness direction Z, it is possible to suppress the load generated on the intermediate portions 23 and 28 of the first leaf spring 11B and the third leaf spring 13B and it is possible to improve durability.

According to the method for manufacturing the pressure spring 4 according to the present embodiment, the connecting step of connecting the first fixed portions 21 and the flat portions 27 to the long second leaf spring material 132 and the cutting step of cutting at least the second leaf spring material 132 to obtain the pressure spring 4 are performed in this order. Therefore, it is possible to efficiently manufacture the plurality of pressure springs 4, for example, as compared with a case where the first leaf spring 11B and the third leaf spring 13B, which have been cut to a prescribed length, are connected to the second leaf spring 12B, which has been cut to a prescribed length.

The first fixed portions 21 and the flat portions 27 are connected to the second leaf spring material 132 in a state where the stress in the direction of pulling in the first specific direction is applied to the outer surfaces 23a and 28a side of the intermediate portions 23 and 28 of the first leaf spring 11B and the third leaf spring 13B. In this case, the pressure spring 4 can be easily obtained.

During the connecting step, the first fixed portions 21 and the flat portions 27 are connected to the second leaf spring material 132 in a state where the first leaf spring 11B and the third leaf spring 13B are elastically deformed such that the size of each of the first leaf spring 11B and the third leaf spring 13B in the length direction X is reduced. In this case, the step of applying the residual stress described above in advance can be omitted.

In the cutting step, the second leaf spring material 132 is cut together with the first leaf spring material 131 and the third leaf spring material 133 to obtain the pressure spring 4, and thus it is possible to efficiently manufacture the plurality of pressure springs 4.

### (Tenth Embodiment)

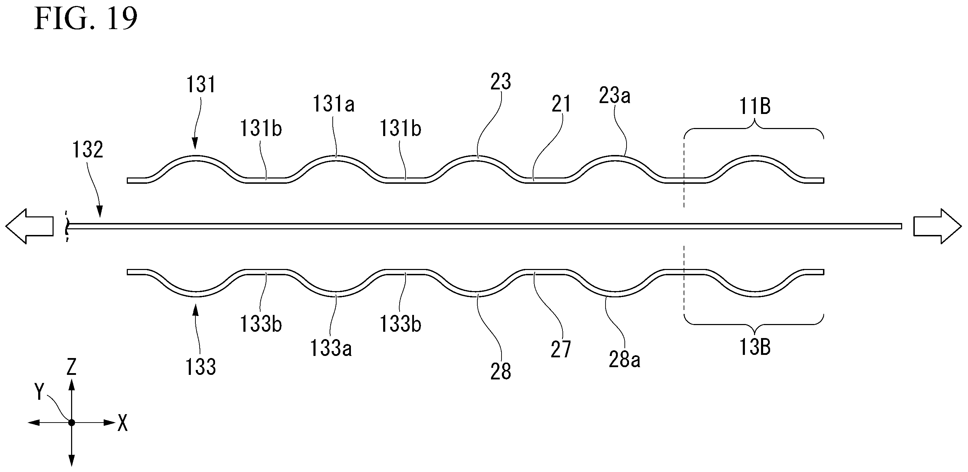

Next, a method for manufacturing the pressure spring 4 according to a tenth embodiment of the present invention will be described with reference to FIG. 19. In the manufacturing method of the present embodiment, for the pressure spring 4 of the fourth embodiment shown in FIGS. 8A and 8B, a plurality of pressure springs 4 arranged consecutively are manufactured.

In the tenth embodiment, the same parts as the components in the ninth embodiment are denoted by the same reference numerals, a description thereof will be omitted, and only the differences will be described.

In the method for manufacturing the pressure spring 4 according to the present embodiment, before the connecting step, the residual stress in the direction of pulling in the first specific direction is applied to the outer surfaces 23a and 28a side of the intermediate portions 23 and 28 of the first leaf spring 11B and the third leaf spring 13B. Then, during the connecting step, the first fixed portions 21 of the first leaf spring 11B and the flat portions 27 of the third leaf spring 13B are connected to the second leaf spring material 132 by the connecting machine 126 shown in FIG. 17 in a state where the second leaf spring material 132 is pulled in the length direction X. At this time, for each of the first leaf spring material 131 and the third leaf spring material 133, the two holding jigs 125 are brought into contact with the two flat portions 131b and 133b located on both sides of the curved portions 131a and 133a in the length direction X, in a state where the relative movement is restricted, without moving the two holding jigs 125 close to each other in the length direction X.

After the connecting step, the holding jig 125 and the connecting machine 126 are moved away from the first leaf spring material 131 and the third leaf spring material 133 in the plate thickness direction Z, as in the ninth embodiment. In this state, the second leaf spring material 132 is fed out such that a portion of the second leaf spring material 132 connected during the above-described connecting step is moved away from the holding jig 125 and the connecting machine 126 in the length direction X to a position at which the cutting machine is provided, and cut by the cutting machine to obtain the pressure spring 4 (cutting step).

Alternatively, the plurality of pressure springs 4 may be obtained by the following procedure. That is, during the connecting step, the plurality of first leaf springs 11B are connected to the second leaf spring material 132 along the length direction X, and the plurality of third leaf springs 13B are connected to the second leaf spring material 132 in the length direction X. Thereafter, during the cutting step, as a first cutting, the second leaf spring material 132 is cut at two connecting portions 134 located at the outermost positions in the length direction X among connecting portions of the second leaf spring material 132 with the plurality of first leaf springs 11B and the plurality of third leaf springs 13B to obtain a connected body of the pressure springs 4. Thereafter, as a second cutting, the remaining connecting portions in the connected body of the pressure spring 4 are cut by the cutting machine to obtain the plurality of pressure springs 4.

In the present embodiment, in a case where the second leaf spring material 132 is pulled in the length direction X during the connecting step, a stress in the direction of pulling in the first specific direction, including the residual stress, may not be applied at all to the outer surfaces 23a and 28a side of the intermediate portions 23 and 28 of the first leaf spring 11B and the third leaf spring 13B. Further, in a case where a stress in the direction of pulling in the first specific direction is applied to the outer surfaces 23a and 28a side of the intermediate portions 23 and 28 of the first leaf spring 11B and the third leaf spring 13B, during the connecting step, the second leaf spring material 132 may not be pulled in the length direction X.

As described above, with the method for manufacturing the pressure spring 4 according to the present embodiment, before the connecting step, the residual stress in the direction of pulling in the first specific direction is applied to the outer surfaces 23a and 28a side of the intermediate portions 23 and 28 of the first leaf spring 11B and the third leaf spring 13B. Therefore, during the connecting step, it is possible to eliminate or at least suppress a force applied to the first leaf spring 11B and the third leaf spring 13B in order to generate the stress in the direction of pulling in the first specific direction on the outer surfaces 23a and 28a side of the intermediate portions 23 and 28 of the first leaf spring 11B and the third leaf spring 13B, and thus the pressure spring 4 can be easily obtained.

During the connecting step, the first fixed portions 21 of the first leaf spring 11B and the flat portions 27 of the third leaf spring 13B are connected to the second leaf spring material 132 in a state where the second leaf spring material 132 is pulled in the length direction X. Therefore, the restoring force is generated in the second leaf spring 12B cut out from the second leaf spring material 132 in the cutting step, so that the stress in the direction of pulling in the first specific direction is applied to the outer surfaces 23a and 28a side of the intermediate portions 23 and 28 of the first leaf spring 11B and the third leaf spring 13B. Accordingly, during the connecting step, it is possible to eliminate or at least suppress a force applied to the first leaf spring 11B and the third leaf spring 13B in order to generate the stress in the direction of pulling in the first specific direction on the outer surfaces 23a and 28a side of the intermediate portions 23 and 28 of the first leaf spring 11B and the third leaf spring 13B, and thus the pressure spring 4 can be easily obtained.

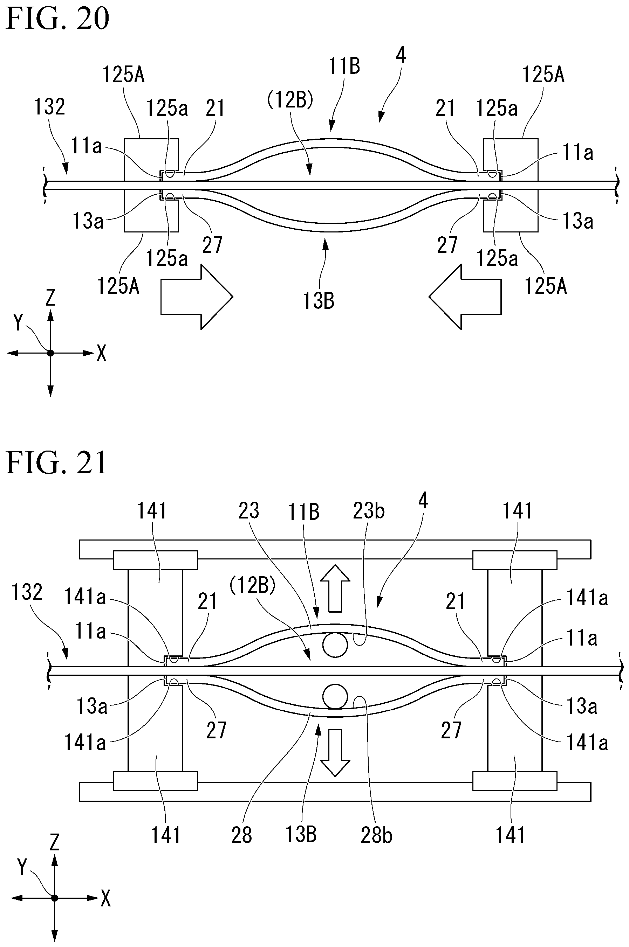

Next, a method for manufacturing the pressure spring 4 according to the eleventh to fourteenth embodiments of the present invention will be described with reference to FIGS. 20 to 23.

The eleventh to fourteenth embodiments are different from the ninth and tenth embodiments in that, in the connecting step, the individual first leaf springs 11B are used without adopting the long first leaf spring material 131, and the individual third leaf springs 13B are used without adopting the long third leaf spring material 133. That is, in the eleventh to fourteenth embodiments, only the long second leaf spring material 132 is cut during the cutting step.

The eleventh to fourteenth embodiments are common in that, during the connecting step, the first fixed portions 21 of the first leaf spring 11B and the flat portions 27 of the third leaf spring 13B are connected to the second leaf spring material 132 in a state where the first leaf spring 11B and the third leaf spring 13B are elastically deformed such that the size of each of the first leaf spring 11B and the third leaf spring 13B in the length direction X is reduced. In the eleventh to fourteenth embodiments, the connecting machine 126 is not shown.

In the eleventh to fourteenth embodiments, a form (method) in which the first leaf spring 11B and the third leaf spring 13B are elastically deformed such that the size of each of the first leaf spring 11B and the third leaf spring 13B in the length direction X is reduced during the connecting step is different.

### (Eleventh Embodiment)

A method for manufacturing the pressure spring 4 according to the eleventh embodiment of the present invention will be described with reference to FIG. 20. In the eleventh embodiment, the same portions as the components in the ninth embodiment are denoted by the same reference numerals, a description thereof will be omitted, and only the differences will be described.

In the method for manufacturing the pressure spring 4 according to the present embodiment, during the connecting step, for each of the first leaf spring 11B and the third leaf spring 13B, two holding jigs 125A provided spaced apart from each other in the length direction X are brought into contact with not only the outer surfaces of the first leaf spring 11B and the third leaf spring 13B facing a side opposite to the second leaf spring 12B in the plate thickness direction Z but also the end edges 11a and 13a facing the length direction X. In this state, the two holding jigs 125A are moved close to each other in the length direction X, and the first leaf spring 11B and the third leaf spring 13B are elastically deformed such that the size of each of the first leaf spring 11B and the third leaf spring 13B in the length direction X is reduced. A recess portion 125a into which the first fixed portion 21 or the flat portion 27 is inserted is formed in the holding jig 125A. Note that, during the connecting step, any one holding jig 125A of the two holding jigs 125A may be fixed, and the other holding jig 125A may be moved in the length direction X.

As described above, with the method for manufacturing the pressure spring 4 according to the present embodiment, during the connecting step, for each of the first leaf spring 11B and the third leaf spring 13B, the holding jig 125A supports not only the outer surfaces thereof facing a side opposite to the second leaf spring 12B in the plate thickness direction Z but also the end edges 11a and 13a facing the length direction X. Therefore, the first leaf spring 11B and the third leaf spring 13B can be elastically deformed with high accuracy as described above.

### (Twelfth Embodiment)

A method for manufacturing the pressure spring 4 according to the twelfth embodiment of the present invention will be described with reference to FIG. 21. In the twelfth embodiment, the same portions as the components in the eleventh embodiment are denoted by the same reference numerals, a description thereof will be omitted, and only the differences will be described.

In the method for manufacturing the pressure spring 4 according to the present embodiment, during the connecting step, for each of the first leaf spring 11B and the third leaf spring 13B, the first fixed portions 21 and the flat portions 27 are supported by support members 141. In this state, the inner surfaces 23b and 28b of the intermediate portions 23 and 28 are pressed toward a side opposite to the second leaf spring 12B in the plate thickness direction Z, and the first leaf spring 11B and the third leaf spring 13B are elastically deformed such that the size of each of the first leaf spring 11B and the third leaf spring 13B in the length direction X is reduced.

Two support members 141 are provided at intervals in the length direction X for each of the first fixed portion 21 and the flat portion 27, and are supported to be slidable in the length direction X. The two support members 141 move close to each other in the length direction X in accordance with the elastic deformation of the first leaf spring 11B and the third leaf spring 13B. A recess portion 141a into which the first fixed portion 21 or the flat portion 27 is inserted is formed in the support member 141. The support members 141 are brought into contact with not only the outer surface facing a side opposite to the second leaf spring 12B in the plate thickness direction Z but also the end edges 11a and 13a facing the length direction X for each of the first leaf spring 11B and the third leaf spring 13B.

As described above, with the method for manufacturing the pressure spring 4 according to the present embodiment, the first leaf spring 11B and the third leaf spring 13B can be elastically deformed with high accuracy as described above.

### (Thirteenth Embodiment)

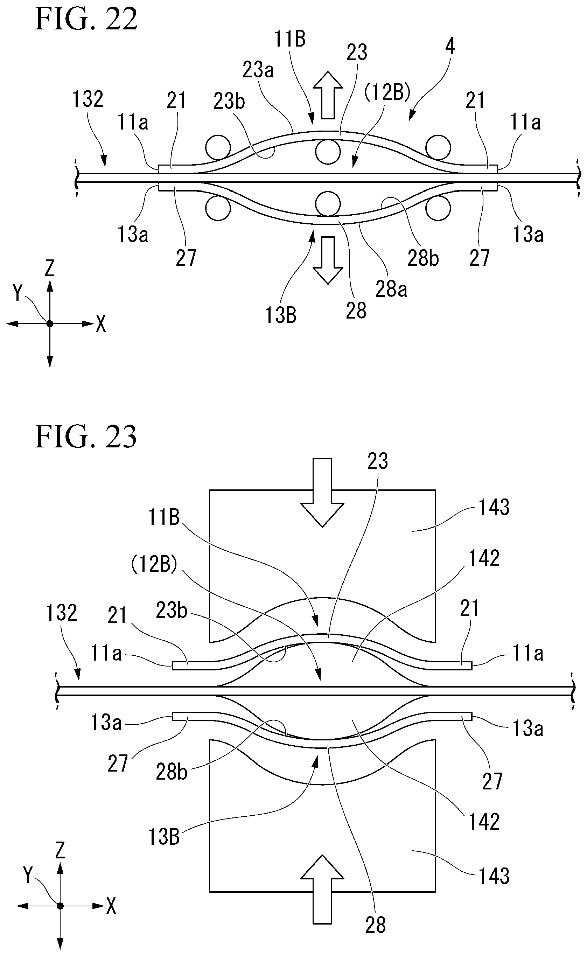

A method for manufacturing the pressure spring 4 according to the thirteenth embodiment of the present invention will be described with reference to FIG. 22. In the thirteenth embodiment, the same portions as the components in the twelfth embodiment are denoted by the same reference numerals, a description thereof will be omitted, and only the different points will be described.

In the method for manufacturing the pressure spring 4 according to the present embodiment, during the connecting step, for each of the first leaf spring 11B and the third leaf spring 13B, portions located on both sides in the outer surfaces 23a and 28a of the intermediate portions 23 and 28 with a central portion of the outer surfaces 23a and 28a of the intermediate portions 23 and 28 in the length direction X interposed therebetween in the length direction X are supported. In this state, the central portions of the inner surfaces 23b and 28b of the intermediate portions 23 and 28 in the length direction X are pressed toward a side opposite to the second leaf spring 12B in the plate thickness direction Z, and the first leaf spring 11B and the third leaf spring 13B are elastically deformed such that the size of each of the first leaf spring 11B and the third leaf spring 13B in the length direction X is reduced.

As described above, with the method for manufacturing the pressure spring 4 according to the present embodiment, during the connecting step, for each of the first leaf spring 11B and the third leaf spring 13B, in a state where the portions located on both sides in the outer surfaces 23a and 28a of the intermediate portions 23 and 28 with the central portion of the outer surfaces 23a and 28a of the intermediate portions 23 and 28 in the length direction X interposed therebetween in the length direction X are supported, the central portions of the inner surfaces 23b and 28b of the intermediate portions 23 and 28 in the length direction X are pressed toward the side opposite to the second leaf spring 12B in the plate thickness direction Z by a deformation jig. Therefore, the intermediate portions 23 and 28 of the first leaf spring 11B and the third leaf spring 13B are subjected to three-point bending, and the pressure spring 4 in which the tensile stress in the first specific direction is applied to the outer surfaces 23a and 28a side of the intermediate portions 23 and 28 of the first leaf spring 11B and the third leaf spring 13B can be easily and accurately manufactured.

### (Fourteenth Embodiment)

A method for manufacturing the pressure spring 4 according to the fourteenth embodiment of the present invention will be described with reference to FIG. 23. In the fourteenth embodiment, the same portions as the components in the eleventh embodiment are denoted by the same reference numerals, a description thereof will be omitted, and only the different points will be described.

In the method for manufacturing the pressure spring 4 according to the present embodiment, during the connecting step, the inner surfaces 23b and 28b of the intermediate portions 23 and 28 of the first leaf spring 11B and the third leaf spring 13B are supported by support dies 142. In this state, pressing dies 143 presses the outer surfaces of the intermediate portions 23 and 28, which face a side opposite to the second leaf spring 12B in the plate thickness direction Z, over the entire region toward the second leaf spring 12B in the plate thickness direction Z, and the first leaf spring 11B and the third leaf spring 13B are elastically deformed such that the size of each of the first leaf spring 11B and the third leaf spring 13B in the length direction X is reduced.

As described above, with the method for manufacturing the pressure spring 4 according to the present embodiment, the first leaf spring 11B and the third leaf spring 13B can be elastically deformed with high accuracy as described above.

In the eleventh to fourteenth embodiments, during the connecting step, the second leaf spring material 132 may or may not be pulled in the length direction X.

In the eleventh to fourteenth embodiments, before the connecting step, the residual stress in the direction of pulling in the first specific direction may be applied to the outer surfaces 23a and 28a side of the intermediate portions 23 and 28 of the first leaf spring 11B and the third leaf spring 13B.

The above-described manufacturing methods of the eleventh to fourteenth embodiments may be applied to the method for manufacturing the pressure spring 1 according to the eighth embodiment. That is, in the method for manufacturing the pressure spring 1 according to the eighth embodiment, in the connecting step, the individual first leaf springs 11 may be used without adopting the long first leaf spring material 131. In this case, only the long second leaf spring material 132 is cut during the cutting step.

### (Fifteenth Embodiment)

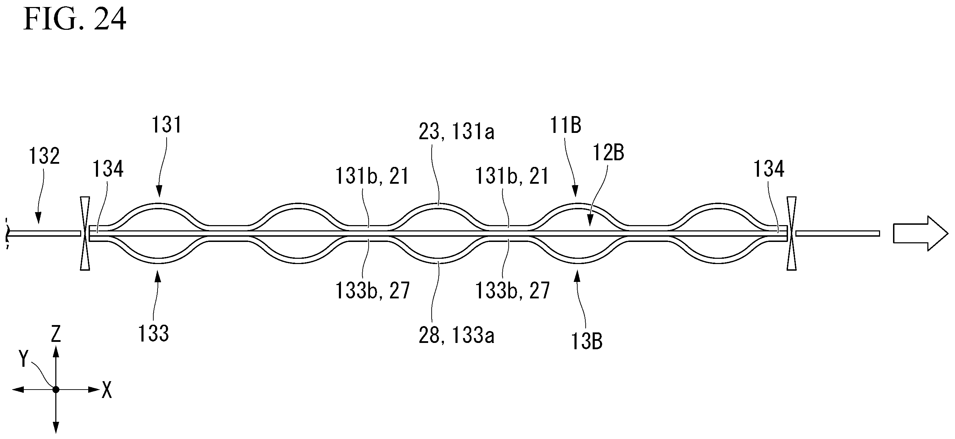

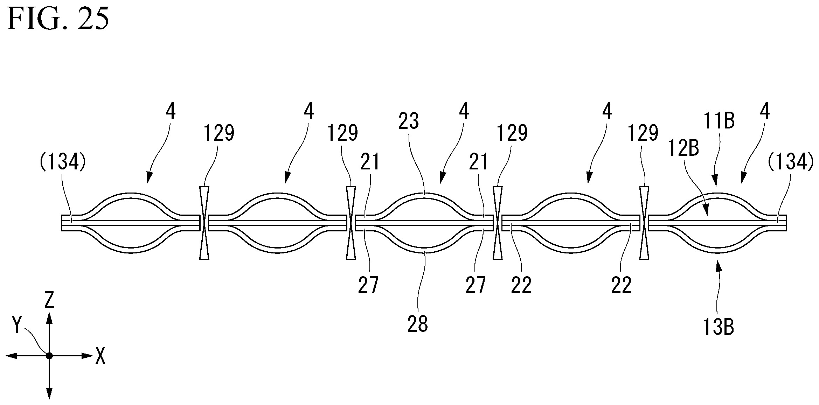

Next, a method for manufacturing the pressure spring 4 according to a fifteenth embodiment of the present invention will be described with reference to FIGS. 24 and 25. In the manufacturing method of the present embodiment, for the pressure spring 4 of the fourth embodiment shown in FIGS. 8A and 8B, a plurality of pressure springs 4 arranged consecutively are manufactured.

In the fifteenth embodiment, the same portions as the components in the ninth embodiment are denoted by the same reference numerals, a description thereof will be omitted, and only the different points will be described.

In the method for manufacturing the pressure spring 4 according to the present embodiment, during the connecting step, the plurality of first leaf springs 11B are connected to the second leaf spring material 132 in the length direction X and the plurality of third leaf springs 13B are connected to the second leaf spring material 132 in the length direction X. The connecting portion of the second leaf spring material 132 with the first leaf spring 11B and the connecting portion of the second leaf spring material 132 with the third leaf spring 13B are located at the same position in the length direction X. Thereafter, during the cutting step, as the first cutting, the second leaf spring material 132 is cut at the two connecting portions 134 located at the outermost positions in the length direction X among the connecting portions of the second leaf spring material 132 with the plurality of first leaf springs 11B and the plurality of third leaf springs 13B. Then, a connected body of the pressure springs 4 having the cut second leaf spring material 132 to which the plurality of first leaf springs 11B and the plurality of third leaf springs 13B are connected is moved from a connecting machine used during the connecting step to the cutting machine 129 used during the cutting step. Thereafter, as the second cutting, the remaining connecting portions are cut by the cutting machine 129 to obtain the plurality of pressure springs 4.

As described above, with the method for manufacturing the pressure spring 4 according to the present embodiment, during the connecting step, the first fixed portions 21 of the plurality of first leaf springs 11B are connected to the second leaf spring material 132 in the length direction X and the flat portions 27 of the plurality of third leaf springs 13B are connected to the second leaf spring material 132 in the length direction X. Therefore, it is possible to connect the plurality of first fixed portions 21 and the plurality of flat portions 27 to the second leaf spring material 132 in a state where the same position of the second leaf spring material 132 in the length direction X is fixed. The plurality of pressure springs 4 can be efficiently manufactured, for example, as compared with a case where the cutting step is performed each time one first leaf spring 11B and one third leaf spring 13B are connected to the second leaf spring material 132.

During the cutting step, as the first cutting, the second leaf spring material 132 is cut at the two connecting portions 134 located at the outermost positions in the length direction X among the connecting portions of the second leaf spring material 132 with the plurality of first leaf springs 11B and the plurality of third leaf springs 13B, and as the second cutting, the remaining connecting portions are cut to obtain the plurality of pressure springs 4. Therefore, it is possible to move the connected body of the pressure springs 4 having the cut second leaf spring material 132 to which the plurality of first leaf springs 11B and the plurality of third leaf springs 13B are connected from the connecting machine used during the connecting step to the cutting machine 129 used during the second cutting. As a result, the plurality of pressure springs 4 can be efficiently manufactured, for example, by performing the connecting step and the second cutting in the cutting step in parallel.

In the ninth, tenth, and fifteenth embodiments, in the connecting step, the individual first leaf springs 11 may be used without adopting the long first leaf spring material 131, and the individual third leaf springs 13 may be used without adopting the long third leaf spring material 133.

### (Sixteenth Embodiment)

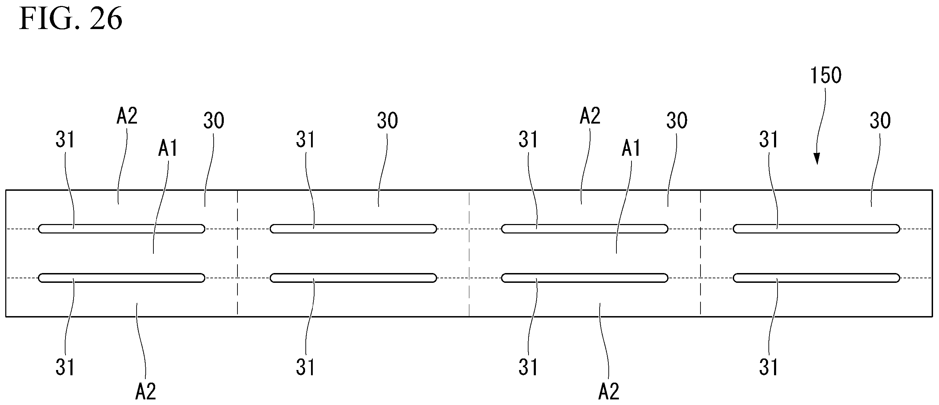

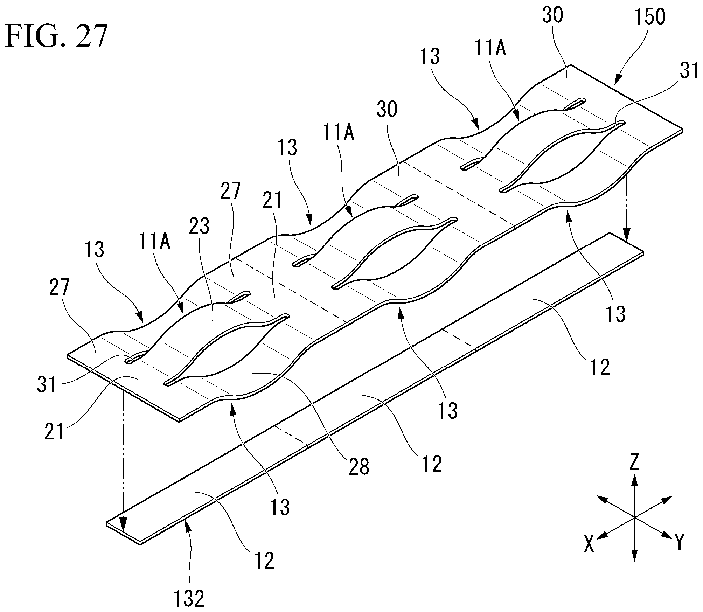

Next, a method for manufacturing the pressure spring 2 according to a sixteenth embodiment of the present invention will be described with reference to FIGS. 26 and 27. In the manufacturing method according to the present embodiment, for the pressure spring 2 of the second embodiment shown in FIGS. 3 and 4, a plurality of pressure springs 2 arranged consecutively are manufactured. In the method for manufacturing the pressure spring 2 according to the present embodiment, a slit formation step, a connecting step, and a cutting step are performed in this order.

The pressure spring 2 includes the first leaf spring 11A, the second leaf spring 12, and the third leaf spring 13. The third leaf spring 13 has the intermediate portion 28 provided on a side opposite to the first leaf spring 11A with the intermediate portion 24 of the second leaf spring 12 interposed therebetween in the plate thickness direction Z as viewed in the plate width direction Y. The first leaf spring 11A and the third leaf spring 13 are included in the integrated plate material 30. The third leaf spring 13 is located at a position different from the first leaf spring 11A in the plate width direction Y. A stress in the direction of pulling in the direction along the outer surface 23a of the first leaf spring 11A as viewed in the plate width direction Y is applied to the outer surface 23a side of the intermediate portion 23 of the first leaf spring 11A. A stress in the direction of pulling in the direction along the outer surface 28a of the third leaf spring 13 as viewed in the plate width direction Y is applied to the outer surface 28a side of the intermediate portion 28 of the third leaf spring 13, which is opposite to the outer surface 23a of the first leaf spring 11A.

The slit formation step is performed before the connecting step. In the slit formation step, as shown in FIG. 26, for a flat plate material 150 in which the plurality of plate materials 30 are arranged integrally and consecutively in the length direction X, two or more slits 31 extending in the length direction X are formed in each plate material 30 with at least one end of the plate material 30 remaining to form a total of three or more first region A1 and second region A2.

In the connecting step, as shown in FIG. 27, both end portions (first fixed portions 21) of the first leaf spring 11A in the length direction X in the flat plate material 150 (plate material 30) are connected to the long second leaf spring material 132 in which the plurality of second leaf springs 12 are arranged integrally and consecutively in the length direction. At this time, as in the connecting step in the manufacturing method according to the eighth embodiment, both end portions of the first leaf spring 11A in the length direction X are connected to the second leaf spring material 132 by using the holding jig 125 and the connecting machine 126.

In the cutting step, the second leaf spring material 132 is cut together with the flat plate material 150 to obtain the pressure spring 2. At this time, as in the cutting step in the manufacturing method according to the eighth embodiment, the holding jig 125 and the connecting machine 126 are moved away from the flat plate material 150 in the plate thickness direction Z. In this state, the second leaf spring material 132 is fed out such that the portion of the second leaf spring material 132 connected during the connecting step described above is moved away from the holding jig 125 and the connecting machine 126 in the length direction X to a position at which the cutting machine 129 is provided, and is cut by the cutting machine 129.

In the present embodiment, an example is shown in which the long flat plate material 150 in which the plurality of first leaf springs 11A and the plurality of third leaf springs 13 are formed in the length direction X is connected to the second leaf spring material 132. However, the long flat plate material 150 may not be adopted, and the individual plate materials 30 in which the first leaf spring 11A and the two third leaf springs 13 are formed may be used as the flat plate material.

In addition, in the present embodiment, as in the tenth embodiment, it is particularly preferable that a deformation step is performed before the connecting step (between the slit formation step and the connecting step). In the deformation step, a residual stress in the direction of pulling in the direction along the outer surface 23a of the first leaf spring 11A as viewed in the plate width direction Y is applied to the outer surface 23a side of the intermediate portion 23 of the first leaf spring 11A, and a residual stress in the direction of pulling in the direction along the outer surface 28a of the third leaf spring 13 as viewed in the plate width direction Y is applied to the outer surface 28a side of the intermediate portion 28 of the third leaf spring 13. The deformation step may be the same as the deformation step in the manufacturing method according to the second embodiment.

Further, during the connecting step, both end portions of the first leaf spring 11A in the length direction X may be connected to the second leaf spring material 132 in a state where a stress in the direction of pulling in the direction along the outer surface 23a of the first leaf spring 11A as viewed in the plate width direction Y is applied to the outer surface 23a side of the intermediate portion 23 of the first leaf spring 11A.

Alternatively, in the present embodiment, the deformation step may not be performed, and the deformation and the connecting of the first leaf spring 11A may be performed at the same time. Specifically, as in the ninth and eleventh to fourteenth embodiments, during the connecting step, both end portions of the first leaf spring 11A in the length direction X may be connected to the second leaf spring material 132 in a state where the first leaf spring 11A and the third leaf spring 13 are elastically deformed such that the size of the first leaf spring 11A in the length direction X is reduced.

Further, during the connecting step, both end portions of the first leaf spring 11A in the length direction may be connected to the second leaf spring material 132 in a state where the second leaf spring material 132 is pulled in the length direction X.

In addition, in the present embodiment, in the cutting step, the second leaf spring material 132 may be generally cut in order from the end. Alternatively, the following procedure may be adopted as in the fifteenth embodiment. That is, during the connecting step, the plurality of first leaf springs 11 A are connected to the second leaf spring material 132 in the length direction X. Thereafter, the second leaf spring material 132 is cut at two connecting portions located at the outermost positions in the length direction among the connecting portions of the second leaf spring material 132 with the plurality of first leaf springs 11A. Thereafter, during the cutting step, the remaining connecting portions are cut.

### (Seventeenth Embodiment)

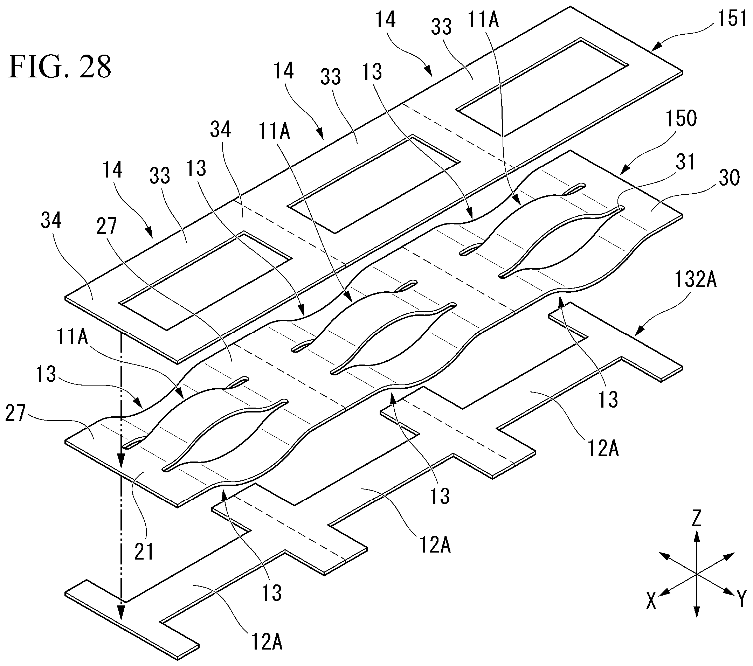

Next, a method for manufacturing the pressure spring 3 according to a seventeenth embodiment of the present invention will be described with reference to FIG. 28. In the manufacturing method according to the present embodiment, for the pressure spring 3 according to the third embodiment shown in FIG. 7, a plurality of pressure springs 3 arranged consecutively are manufactured. In the method for manufacturing the pressure spring 3 according to the present embodiment, a slit formation step, a connecting step, and a cutting step are performed in this order.

The pressure spring 3 includes the first leaf spring 11A, the second leaf spring 12A, the third leaf spring 13, and the fourth leaf spring 14. The third leaf spring 13 has the intermediate portion 28 provided on a side opposite to the first leaf spring 11A with the intermediate portion 24 of the second leaf spring 12A interposed therebetween in the plate thickness direction Z as viewed in the plate width direction Y. The intermediate portion 33 of the fourth leaf spring 14 in the length direction X faces the intermediate portion 28 of the third leaf spring 13 in a state of being spaced apart from the intermediate portion 28 in the plate thickness direction Z. The first leaf spring 11A and the third leaf spring 13 are included in the integrated plate material 30. The third leaf spring 13 is located at a position different from the first leaf spring 11A in the plate width direction Y. A stress in the direction of pulling in the direction along the outer surface 23a of the first leaf spring 11A as viewed in the plate width direction Y is applied to the outer surface 23a side of the intermediate portion 23 of the first leaf spring 11A. A stress in the direction of pulling in the direction along the outer surface of the third leaf spring 13 as viewed in the plate width direction Y is applied to the outer surface 28a side of the intermediate portion 28 of the third leaf spring 13, which is opposite to the outer surface 23a of the first leaf spring 11A.

The slit formation step is performed before the connecting step. In the slit formation step, as in the sixteenth embodiment, for the flat plate material 150 in which the plurality of plate materials 30 are arranged integrally and consecutively in the length direction X, two or more slits 31 extending in the length direction are formed in each plate material 30 with at least one end of the plate material 30 remaining to form total of three or more first region A1 and second region A2.

In the connecting step, both end portions (first fixed portions 21) of the first leaf spring 11A in the length direction X in the flat plate material 150 (plate material 30) are connected to a long second leaf spring material 132A in which the plurality of second leaf springs 12A are arranged integrally and consecutively in the length direction, and both end portions (flat portions 27) of the third leaf spring 13 in the length direction X in the flat plate material 150 (plate material 30) are connected to a long fourth leaf spring material 151 in which the plurality of fourth leaf springs 14 are arranged integrally and consecutively in the length direction. At this time, as in the connecting step in the manufacturing method according to the eighth embodiment, by using the holding jig 125 and the connecting machine 126, both end portions of the first leaf spring 11A in the length direction X are connected to the second leaf spring material 132A and both end portions of the third leaf spring 13 in the length direction X are connected to the fourth leaf spring material 151.

In the cutting step, at least the second leaf spring material 132A and the fourth leaf spring material 151 are cut to obtain the pressure spring 2. At this time, as in the cutting step in the manufacturing method according to the eighth embodiment, the holding jig 125 and the connecting machine 126 are moved away from the flat plate material 150 in the plate thickness direction Z. In this state, the second leaf spring material 132A is fed out such that the portion of the second leaf spring material 132A connected during the connecting step described above is moved away from the holding jig 125 and the connecting machine 126 in the length direction X to a position at which the cutting machine 129 is provided, and is cut by the cutting machine 129.

In the present embodiment, as in the tenth embodiment, it is particularly preferable that a deformation step is performed before the connecting step (between the slit formation step and the connecting step). In the deformation step, a residual stress in the direction of pulling in the direction along the outer surface 23a of the first leaf spring 11A as viewed in the plate width direction Y is applied to the outer surface 23a side of the intermediate portion 23 of the first leaf spring 11A, and a residual stress in the direction of pulling in the direction along the outer surface 28a of the third leaf spring 13 as viewed in the plate width direction Y is applied to the outer surface 28a side of the intermediate portion 28 of the third leaf spring 13.

Further, during the connecting step, both end portions of the first leaf spring 11A in the length direction X may be connected to the second leaf spring material 132A in a state where a stress in the direction of pulling in the direction along the outer surface 23a of the first leaf spring 11A as viewed in the plate width direction Y is applied to the outer surface 23a side of the intermediate portion 23 of the first leaf spring 11A, and both end portions of the third leaf spring 13 in the length direction X may be connected to the fourth leaf spring material 151 in a state where a stress in the direction of pulling in the direction along the outer surface 28a of the third leaf spring 13 as viewed in the plate width direction Y is applied to the outer surface 28a side of the intermediate portion 28 of the third leaf spring 13.

Alternatively, in the present embodiment, the deformation step may not be performed, and the deformation and the connecting of the first leaf spring 11A and the third leaf spring 13 may be performed at the same time. Specifically, as in the ninth and eleventh to fourteenth embodiments, during the connecting step, both end portions of the first leaf spring 11A in the length direction X may be connected to the second leaf spring material 132A in a state where the first leaf spring 11A and the third leaf spring 13 are elastically deformed such that the size of the first leaf spring 11A in the length direction X is reduced. During the connecting step, both end portions of the third leaf spring 13 in the length direction X may be connected to the fourth leaf spring material 151 in a state where the first leaf spring 11A and the third leaf spring 13 are elastically deformed such that the size of the third leaf spring 13 in the length direction X is reduced.

Further, during the connecting step, both end portions of the first leaf spring 11A in the length direction may be connected to the second leaf spring material 132A and both end portions of the third leaf spring 13 in the length direction X may be connected to the fourth leaf spring material 151 in a state where the second leaf spring material 132A and the fourth leaf spring material 151 are pulled in the length direction X.

In addition, in the present embodiment, in the cutting step, the second leaf spring material 132A and the fourth leaf spring material 151 may be generally cut in order from the end. Alternatively, the following procedure may be adopted as in the fifteenth embodiment. That is, in the connecting step, the plurality of first leaf springs 11A are connected to the second leaf spring material 132A in the length direction X, and the plurality of third leaf springs 13 are connected to the fourth leaf spring material 151 in the length direction X. Thereafter, the second leaf spring material 132A and the fourth leaf spring material 151 are cut at two connecting portions located at the outermost positions in the length direction among the connecting portions of the second leaf spring material 132A and the fourth leaf spring material 151 with the plurality of first leaf springs 11A and the plurality of third leaf springs 13. Thereafter, during the cutting step, the remaining connecting portions are cut.

The technical scope of the present invention is not limited to the above embodiment, and various modifications can be made without departing from the spirit of the present invention.

In addition, it is possible to appropriately replace the components in the above embodiment with well-known components without departing from the spirit of the present invention. Additionally, the above-described embodiment and the modification examples may be combined with each other as appropriate.

### REFERENCE SIGNS LIST

1, 2, 3, 4, 5, 6 Pressure spring
7 Pressure spring structure
11, 11A, 11B, 11C, 11D First leaf spring
12, 12A, 12B, 12D Second leaf spring
13, 13B, 13C Third leaf spring
14 Fourth leaf spring
21 First fixed portion (fixed portion, both end portions)
22 Second fixed portion (fixed portion, both end portions)
23 Intermediate portion of first leaf spring
23a Outer surface
23b Inner surface
24 Intermediate portion of second leaf spring
27 Flat portion (both end portions)
28 Intermediate portion of third leaf spring
33 Intermediate portion of fourth leaf spring
34 Both end portions
X Length direction
Y Plate width direction
Z Plate thickness direction

## Claims

1. A pressure spring comprising:
a first leaf spring and a second leaf spring that extend in a length direction,
wherein both end portions of the first leaf spring in the length direction are fixed portions laminated and connected to the second leaf spring in a plate thickness direction,
intermediate portions of the first leaf spring and the second leaf spring in the length direction face each other in a state of being spaced apart from each other in the plate thickness direction,
a length of the intermediate portion of the second leaf spring along a surface of the second leaf spring as viewed in a plate width direction is shorter than a length of the intermediate portion of the first leaf spring along a surface of the first leaf spring as viewed in the plate width direction,
the intermediate portion of the first leaf spring has a residual stress applied to an outer surface side thereof, which is an opposite side to the second leaf spring in the plate thickness direction, in a direction of pulling in a direction along an outer surface of the first leaf spring as viewed in the plate width direction, and
the intermediate portion of the second leaf spring is in an unloaded state in the length direction.

2. The pressure spring according to Claim 1,
wherein the intermediate portion of the first leaf spring is curved to have a curved shape protruding in a direction of being away from the intermediate portion of the second leaf spring in the plate thickness direction as viewed in the plate width direction,
the intermediate portion of the first leaf spring has a residual stress applied to an inner surface side thereof, which is a side of the second leaf spring in the plate thickness direction, in a direction of compressing in a direction along an inner surface of the first leaf spring as viewed in the plate width direction, and
the fixed portions extend straight in the length direction as viewed in the plate width direction.

3. The pressure spring according to Claim 1 or 2, further comprising:
a third leaf spring including an intermediate portion provided on a side opposite to the first leaf spring with the intermediate portion of the second leaf spring interposed between the first leaf spring and the intermediate portion of the third leaf spring in the plate thickness direction, as viewed in the plate width direction.

4. The pressure spring according to Claim 3,
wherein the first leaf spring and the third leaf spring are included in an integrated plate material,
two or more slits extending in the length direction are formed in the plate material,
the third leaf spring is located at a position different from the first leaf spring in the plate width direction, and
a total number of the first leaf spring and the third leaf spring formed in the plate material is three or more.

5. The pressure spring according to Claim 4,
wherein, in the plate material, the first leaf spring and the third leaf spring are alternately provided in the plate width direction.

6. The pressure spring according to Claim 4,
wherein an arrangement of the first leaf spring and the third leaf spring is symmetrical with respect to a center in the plate width direction.

7. The pressure spring according to Claim 4, further comprising:
a fourth leaf spring including an intermediate portion in the length direction that faces the intermediate portion of the third leaf spring in a state of being spaced apart from the intermediate portion of the third leaf spring in the plate thickness direction, and is in an unloaded state in the length direction,
wherein both end portions of at least one third leaf spring in the length direction are connected to both end portions of the fourth leaf spring in the length direction.

8. The pressure spring according to Claim 3,
wherein the first leaf spring and the third leaf spring have a shape that is symmetrical with respect to a center line of the second leaf spring in the plate thickness direction, and both end portions of the third leaf spring in the length direction are connected to both end portions of the second leaf spring in the length direction.

9. The pressure spring according to Claim 3,
wherein the first leaf spring and the third leaf spring have a continuous outer periphery when viewed in the plate width direction, and inner peripheral surfaces of both end portions of the first leaf spring in the length direction and inner peripheral surfaces of both end portions of the third leaf spring in the length direction are connected to both end portions of the second leaf spring in the length direction.

10. The pressure spring according to Claim 1,
wherein the first leaf spring and the second leaf spring are formed of an integrated plate material.

11. A pressure spring structure comprising:
two pressure springs each of which is the pressure spring according to Claim 10, the two pressure springs being provided in a state of being inverted relative to each other in the plate thickness direction,
wherein the second leaf springs of the two pressure springs are laminated in the plate thickness direction.

12. A method for manufacturing the pressure spring according to Claim 1 or 2, the method comprising:
a deformation step of plastically deforming a flat plate material for the first leaf spring such that an outer surface side of a portion that is to form the intermediate portion protrudes, applying a residual stress, to the outer surface side of the intermediate portion of the first leaf spring, in the direction of pulling in the direction along the outer surface of the first leaf spring as viewed in the plate width direction, and applying a residual stress, to an inner surface side of the intermediate portion of the first leaf spring, in a direction of compressing in a direction along an inner surface of the first leaf spring as viewed in the plate width direction; and
a connecting step of laminating and connecting both end portions of the first leaf spring in the length direction to the second leaf spring in the plate thickness direction while maintaining the intermediate portion of the second leaf spring in an unloaded state in the length direction.

13. A method for manufacturing the pressure spring according to Claim 4, the method comprising:
a slit formation step of forming two or more slits extending in the length direction in a flat plate material with at least one end of the flat plate material remaining, to form a total of three or more first region and second region;
a deformation step of plastically deforming the first region such that an outer surface side of a portion that is to form the intermediate portion of the first leaf spring protrudes, applying a residual stress, to the outer surface side of the intermediate portion of the first leaf spring, in the direction of pulling in the direction along the outer surface of the first leaf spring as viewed in the plate width direction, applying a residual stress, to an inner surface side of the intermediate portion of the first leaf spring, in a direction of compressing in a direction along an inner surface of the first leaf spring as viewed in the plate width direction, plastically deforming the second region to a side opposite to the portion that is to form the intermediate portion of the first leaf spring such that an outer surface side of a portion that is to form the intermediate portion of the third leaf spring protrudes, applying a residual stress, to an outer surface side of the intermediate portion of the third leaf spring, in a direction of pulling in a direction along an outer surface of the third leaf spring as viewed in the plate width direction, and applying a residual stress, to an inner surface side of the intermediate portion of the third leaf spring, in a direction of compressing in a direction along an inner surface of the first leaf spring as viewed in the plate width direction; and
a connecting step of laminating and connecting both end portions of the first leaf spring in the length direction to both end portions of the second leaf spring in the length direction in the plate thickness direction while maintaining the intermediate portion of the second leaf spring in an unloaded state in the length direction.

14. A method for manufacturing the pressure spring according to Claim 7, the method comprising:
a slit formation step of forming two or more slits extending in the length direction in a flat plate material with at least one end of the flat plate material remaining, to form a total of three or more first region and second region;
a deformation step of plastically deforming the first region such that an outer surface side of a portion that is to form the intermediate portion of the first leaf spring protrudes, applying a residual stress, to the outer surface side of the intermediate portion of the first leaf spring, in the direction of pulling in the direction along the outer surface of the first leaf spring as viewed in the plate width direction, applying a residual stress, to an inner surface side of the intermediate portion of the first leaf spring, in a direction of compressing in a direction along an inner surface of the first leaf spring as viewed in the plate width direction, plastically deforming the second region to a side opposite to the portion that is to form the intermediate portion of the first leaf spring such that an outer surface side of a portion that is to form the intermediate portion of the third leaf spring protrudes, applying a residual stress, to an outer surface side of the intermediate portion of the third leaf spring, in a direction of pulling in a direction along an outer surface of the third leaf spring as viewed in the plate width direction, and applying a residual stress, to an inner surface side of the intermediate portion of the third leaf spring, in a direction of compressing in a direction along an inner surface of the third leaf spring as viewed in the plate width direction; and
a connecting step of laminating and connecting both end portions of the first leaf spring in the length direction to both end portions of the second leaf spring in the length direction, on one side in the plate thickness direction, while maintaining the intermediate portion of the second leaf spring in an unloaded state in the length direction, and laminating and connecting both end portions of the third leaf spring in the length direction to both end portions of the fourth leaf spring in the length direction, on the other side in the plate thickness direction, while maintaining the intermediate portion of the fourth leaf spring in an unloaded state in the length direction.

15. A method for manufacturing the pressure spring according to Claim 8, the method comprising:
a deformation step of plastically deforming a flat plate material for the first leaf spring such that an outer surface side of a portion that is to form the intermediate portion protrudes, applying a residual stress, to the outer surface side of the intermediate portion of the first leaf spring, in the direction of pulling in the direction along the outer surface of the first leaf spring as viewed in the plate width direction, applying a residual stress, to an inner surface side of the intermediate portion of the first leaf spring, in a direction of compressing in a direction along an inner surface of the first leaf spring as viewed in the plate width direction, plastically deforming a flat plate material for the third leaf spring such that an outer surface side of a portion that is to form the intermediate portion protrudes, applying a residual stress, to an outer surface side of the intermediate portion of the third leaf spring, in a direction of pulling in a direction along an outer surface of the third leaf spring as viewed in the plate width direction, and applying a residual stress, to an inner surface side of the intermediate portion of the third leaf spring, in a direction of compressing in a direction along an inner surface of the third leaf spring as viewed in the plate width direction; and
a connecting step of laminating the first leaf spring, the second leaf spring, and the third leaf spring that protrudes in an opposite direction to the first leaf spring in the plate thickness direction, and connecting both end portions of the first leaf spring in the length direction and both end portions of the third leaf spring in the length direction to both end portions of the second leaf spring in the length direction, while maintaining the intermediate portion of the second leaf spring in an unloaded state in the length direction.

16. A method for manufacturing the pressure spring according to Claim 9, the method comprising:
a forming step of crushing a tubular material using a die such that both end portions of the tubular material in a predetermined one direction along a radial direction of the tubular material are flattened and center portions of the tubular material in the one direction are spaced apart from each other to have a protruding curved shape, to continuously form the first leaf spring and the third leaf spring, the first leaf spring and the third leaf spring having a shape that is symmetrical with respect to the one direction of the tubular material;
a fitting step of fitting the second leaf spring into a space between the first leaf spring and the third leaf spring; and
a connecting step of connecting both end portions of the second leaf spring in the length direction to flat portions of the first leaf spring and the third leaf spring.

17. A method for manufacturing the pressure spring according to Claim 10, the method comprising:
a forming step of crushing a tubular material using a die such that, as viewed in an axial direction of the tubular material, one side of the tubular material in a predetermined one direction along a radial direction of the tubular material is formed in a planar shape, and the other side of the tubular material in the one direction is formed such that a center portion in an orthogonal direction orthogonal to the one direction is curved to have a curved shape protruding to the other side in the one direction and both end portions in the orthogonal direction are flattened, to integrally form the first leaf spring and the second leaf spring such that a flat portion of the first leaf spring and a flat surface portion of the second leaf spring are continuous.

18. A method for manufacturing a pressure spring including a first leaf spring and a second leaf spring that extend in a length direction,
in which both end portions of the first leaf spring in the length direction are laminated and connected to both end portions of the second leaf spring in the length direction in a plate thickness direction,
intermediate portions of the first leaf spring and the second leaf spring in the length direction face each other in a state of being spaced apart from each other in the plate thickness direction,
a length of the intermediate portion of the second leaf spring along a surface of the second leaf spring as viewed in a plate width direction is shorter than a length of the intermediate portion of the first leaf spring along a surface of the first leaf spring as viewed in the plate width direction, and
the intermediate portion of the first leaf spring has a stress applied to an outer surface side thereof, which is an opposite side to the second leaf spring in the plate thickness direction, in a direction of pulling in a direction along an outer surface of the first leaf spring as viewed in the plate width direction,
the method comprising:
a connecting step of connecting both end portions of the first leaf spring in the length direction to a long second leaf spring material in which a plurality of the second leaf springs are arranged integrally and consecutively in the length direction; and
a cutting step of cutting at least the second leaf spring material to obtain the pressure spring,
wherein the connecting step and the cutting step are performed in this order.

19. The method for manufacturing a pressure spring according to Claim 18,
wherein during the connecting step, both end portions of the first leaf spring in the length direction are connected to the second leaf spring material in a state where the stress is applied to the outer surface side of the intermediate portion of the first leaf spring in the direction of pulling in the direction along the outer surface of the first leaf spring as viewed in the plate width direction.

20. The method for manufacturing a pressure spring according to Claim 19,
wherein before the connecting step, a residual stress is applied to the outer surface side of the intermediate portion of the first leaf spring in the direction of pulling in the direction along the outer surface of the first leaf spring as viewed in the plate width direction.

21. The method for manufacturing a pressure spring according to Claim 19 or 20,
wherein in the connecting step, both end portions of the first leaf spring in the length direction are connected to the second leaf spring material in a state where the first leaf spring is elastically deformed such that a size of the first leaf spring in the length direction is reduced.

22. The method for manufacturing a pressure spring according to any one of Claims 18 to 20,
wherein during the connecting step, both end portions of the first leaf spring in the length direction are connected to the second leaf spring material in a state where the second leaf spring material is pulled in the length direction.

23. The method for manufacturing a pressure spring according to Claim 18,
wherein the pressure spring further includes a third leaf spring including an intermediate portion provided on a side opposite to the first leaf spring with the intermediate portion of the second leaf spring interposed between the first leaf spring and the intermediate portion of the third leaf spring in the plate thickness direction as viewed in the plate width direction,
an arrangement of the first leaf spring and the third leaf spring is symmetrical with respect to a center of the second leaf spring in the plate thickness direction,
both end portions of the third leaf spring in the length direction are laminated and connected to both end portions of the second leaf spring in the length direction on a side opposite to the first leaf spring in the plate thickness direction,
the intermediate portions of the first leaf spring, the second leaf spring, and the third leaf spring in the length direction face each other in a state of being spaced apart from each other in the plate thickness direction,
the length of the intermediate portion of the second leaf spring along the surface of the second leaf spring as viewed in the plate width direction is shorter than the length of the intermediate portion of the first leaf spring along the surface of the first leaf spring and a length of the intermediate portion of the third leaf spring along a surface of the third leaf spring as viewed in the plate width direction,
the intermediate portion of the third leaf spring has a stress applied to an outer surface side thereof, which is an opposite side to the second leaf spring in the plate thickness direction, in a direction of pulling in a direction along an outer surface of the third leaf spring as viewed in the plate width direction, and
in the connecting step, both end portions of the first leaf spring in the length direction and both end portions of the third leaf spring in the length direction are connected to the second leaf spring material.

24. The method for manufacturing a pressure spring according to Claim 18,
wherein the pressure spring further includes a third leaf spring including an intermediate portion provided on a side opposite to the first leaf spring with the intermediate portion of the second leaf spring interposed between the first leaf spring and the intermediate portion of the third leaf spring in the plate thickness direction as viewed in the plate width direction,
the first leaf spring and the third leaf spring are included in an integrated plate material, and the third leaf spring is located at a position different from the first leaf spring in the plate width direction,
the intermediate portion of the third leaf spring has a stress applied to an outer surface side thereof, which is an opposite side to the outer surface side of the first leaf spring, in a direction of pulling in a direction along an outer surface of the third leaf spring as viewed in the plate width direction,
the method further comprises, before the connecting step, a slit formation step of forming two or more slits extending in the length direction in a flat plate material with at least one end of the flat plate material remaining, to form a total of three or more first region and second region, and
in the connecting step, both end portions of the first leaf spring in the length direction in the flat plate material are connected to the second leaf spring material.

25. The method for manufacturing a pressure spring according to Claim 18,
wherein the pressure spring further includes a third leaf spring including an intermediate portion provided on a side opposite to the first leaf spring with the intermediate portion of the second leaf spring interposed between the first leaf spring and the intermediate portion of the third leaf spring in the plate thickness direction and a fourth leaf spring including an intermediate portion in the length direction that faces the intermediate portion of the third leaf spring in a state of being spaced apart from the intermediate portion of the third leaf spring in the plate thickness direction as viewed in the plate width direction,
the first leaf spring and the third leaf spring are included in an integrated plate material, and the third leaf spring is located at a different position from the first leaf spring in the plate width direction,
the intermediate portion of the third leaf spring has a stress applied to an outer surface side thereof, which is an opposite side to the outer surface side of the first leaf spring, in a direction of pulling in a direction along an outer surface of the third leaf spring as viewed in the plate width direction,
the method further comprises, before the connecting step, a slit formation step of forming two or more slits extending in the length direction in a flat plate material with at least one end of the flat plate material remaining, to form a total of three or more first region and second region,
in the connecting step, both end portions of the first leaf spring in the length direction in the flat plate material are connected to the second leaf spring material, and both end portions of the third leaf spring in the length direction in the flat plate material are connected to a long fourth leaf spring material in which a plurality of the fourth leaf springs are arranged integrally and consecutively in the length direction, and
in the cutting step, at least the second leaf spring material and the fourth leaf spring material are cut to obtain the pressure spring.

26. The method for manufacturing a pressure spring according to Claim 24 or 25, further comprising:
between the slit formation step and the connecting step, a deformation step of applying a residual stress to the outer surface side of the intermediate portion of the first leaf spring in the direction of pulling in the direction along the outer surface of the first leaf spring as viewed in the plate width direction, and applying a residual stress to the outer surface side of the intermediate portion of the third leaf spring in the direction of pulling in the direction along the outer surface of the third leaf spring as viewed in the plate width direction, which is a direction opposite to the direction of the first leaf spring.

27. The method for manufacturing a pressure spring according to any one of Claims 18 to 20,
wherein in the connecting step, a plurality of the first leaf springs are connected to the second leaf spring material in the length direction, and
in the cutting step, the second leaf spring material is cut at two connecting portions located at outermost positions in the length direction among connecting portions of the second leaf spring material with the plurality of first leaf springs, and then the remaining connecting portions are cut to obtain a plurality of the pressure springs.

28. The method for manufacturing a pressure spring according to any one of Claims 18 to 20,
wherein in the connecting step, both end portions of the first leaf spring in the length direction included in a long first leaf spring material, in which a plurality of the first leaf springs are arranged integrally and consecutively in the length direction, are connected to the second leaf spring material, and
in the cutting step, the second leaf spring material is cut together with the first leaf spring material.
